(19) Europäisches Patentamt
European Patent Office
Office européen des brevets

(11) **EP 4 530 668 A1**

(12) **EUROPEAN PATENT APPLICATION**
published in accordance with Art. 153(4) EPC

(43) Date of publication:
**02.04.2025 Bulletin 2025/14**

(21) Application number: **24824739.7**

(22) Date of filing: **24.07.2024**

(51) International Patent Classification (IPC):
***G01S 13/06*** (2006.01)

(52) Cooperative Patent Classification (CPC):
**G01S 7/02; G01S 7/41; G01S 13/04; G01S 13/06;
G01S 13/88; H04B 1/40; H04B 1/525**

(86) International application number:
**PCT/CN2024/107407**

(87) International publication number:
**WO 2025/021130 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.07.2023 CN 202310913653**

(71) Applicant: **Calterah Semiconductor Technology
(Shanghai) Co., Ltd
Shanghai 201210 (CN)**

(72) Inventors:
• **WANG, Zhifei
Shanghai 201210 (CN)**
• **CHEN, Jiashu
Shanghai 201210 (CN)**

(74) Representative: **Balder IP Law, S.L.
Paseo de la Castellana 93
5ª planta
28046 Madrid (ES)**

(54) **TARGET DETECTION METHOD, INTEGRATED CIRCUIT, SENSOR, DEVICE, AND MEDIUM**

(57) Embodiments of the present application relate to the technical field of target detection, and disclose a method for target detection, an integrated circuit, an electromagnetic wave sensor, a device, and a computer-readable storage medium. The method for target detection includes: performing FFT processing on echo signal to generate a feature vector of the echo signal; and processing the feature vector using a machine learning model to achieve target detection in a region of interest.

Perform FFT and beam-forming on echo signal to generate a feature vector of the echo signal, where the feature vector includes energy characteristics representing the echo signal across different range bins — 101

Process the feature vector using a deep learning model to achieve target detection for a region of interest — 102

FIG. 1

## Description

### CROSS-REFERENCE TO RELATED APPLICATIONS

The present application claims the benefit of priority to Chinese Patent Application No. CN202310913653.8, filed on July 24, 2023, the entire disclosure of which is incorporated herein by reference in its entirety.

### TECHNICAL FIELD

Embodiments of the present application relate to the technical field of target detection, and more particularly, to a method for target detection, an integrated circuit, an electromagnetic wave sensor, a device, and a computer-readable storage medium.

### BACKGROUND

When conducting target detection in short-range enclosed or relatively enclosed spatial regions, such as target detection inside automobile cabins, technical issues such as low detection rate, high false alarm rate, and inaccurate angle estimation may arise due to the influence of strong static clutters and multipath. Especially for scenarios involving children left inside vehicles, the detection difficulty is even greater due to the low radar cross section (RCS) of children. Moreover, determination of seat regions based on predetermined rules generally relies on measurement of spatial geometric relationships, appropriate rule designs, and adjustment and optimization of various parameters, which increases the difficulty of deploying and adjusting the equipment.

### SUMMARY

Embodiments of the present application provide a method for target detection, an integrated circuit, an electromagnetic wave sensor, a device, and a computer-readable storage medium, which can improve the accuracy and efficiency of target detection.

According to some embodiments of the present application, a first aspect of the embodiments of the present application provides a method for target detection, including: performing FFT processing on echo signal to generate a feature vector of the echo signal; and processing the feature vector using a machine learning model to achieve target detection in a region of interest (ROI).

According to some embodiments of the present application, a second aspect of the embodiments of the present application provide an integrated circuit, including a radio frequency module, an analog signal processing module, and a digital signal processing module connected in sequence; where the radio frequency module is configured to generate a radio frequency transmitting signal and receive a radio frequency receiving signal; the analog signal processing module is configured to obtain an intermediate frequency signal from the radio frequency receiving signal; and the digital signal processing module is configured to perform analog-to-digital conversion on the intermediate frequency signal. The method for target detection according to the first aspect of the embodiments of the present application is achieved based on this integrated circuit.

According to some embodiments of the present application, a third aspect of the embodiments of the present application provides an electromagnetic wave sensor, including: a carrier, where the integrated circuit according to the second aspect of the embodiments of the present application is arranged on the carrier; an antenna arranged on the carrier, or the antenna and the integrated circuit integrated into a single piece and arranged on the carrier; where the integrated circuit is connected with the antenna to transmit the radio frequency transmitting signal and/or receive the radio frequency receiving signal.

According to some embodiments of the present application, a fourth aspect of the embodiments of the present application provides a device, including: a device body; and the electromagnetic wave sensor according to the third aspect of the embodiments of the present application, which is arranged on the device body; where the electromagnetic wave sensor is configured for target detection and/or communication, to provide reference information for operation of the device body.

### BRIEF DESCRIPTION OF THE DRAWINGS

FIG. 1 is a flowchart of a method for target detection provided in an embodiment of the present application;
FIG. 2 is a flow diagram illustrating the method for target detection provided in an embodiment of the present application;
FIG. 3 is a flowchart of the method for target detection provided in an embodiment of the present application;
FIG. 4 is a flowchart of the method for target detection provided in an embodiment of the present application;
FIG. 5 is a flowchart of the method for target detection provided in an embodiment of the present application;
FIG. 6 is a schematic diagram illustrating the division of the regions of interest involved in the method for target detection provided in an embodiment of the present application;
FIG. 7 is a schematic diagram illustrating data rearrangement involved in the method for target detection provided in an embodiment of the present application;
FIG. 8 is a structural diagram of a deep learning model involved in the method for target detection provided in an embodiment of the present application;
FIG. 9 is a flowchart of the method for target detection provided in an embodiment of the present application;
FIG. 10 is a flow diagram illustrating the method for target detection provided in an embodiment of the present application;
FIG. 11 is a flow diagram illustrating the method for target detection provided in an embodiment of the present application;
FIG. 12 is a flow diagram illustrating the method for target detection provided in an embodiment of the present application;
FIG. 13 to FIG. 22 are schematic diagrams illustrating the method for target detection provided in another embodiment of the present application;
FIG. 23 is a schematic diagram illustrating data rearrangement involved in the method for target detection provided in an embodiment of the present application;
FIG. 24 is a flowchart of the method for target detection provided in an embodiment of the present application;
FIG. 25 is a flowchart of the method for target detection provided in an embodiment of the present application;
and FIG. 26A to 26D are schematic diagrams illustrating the effectiveness of the method for target detection provided in an embodiment of the present application.

## DETAILED DESCRIPTION OF THE EMBODIMENTS

The present disclosure describes multiple embodiments, but the description herein is illustrative rather than restrictive. It is apparent to those skilled in the art that there may be more embodiments and implementation schemes within the scope of the embodiments described in the present disclosure. Although many possible combinations of features are illustrated in the drawings and discussed in the detailed description, many other combinations of the disclosed features are also possible. Unless specifically restricted, any feature or element of any embodiment can be used in combination with, or can replace, any other feature or element in any other embodiment.

The present disclosure includes and envisages combinations with features and elements known to those of ordinary skill in the art. The disclosed embodiments, features, and elements can also be combined with any conventional features or elements to form a unique inventive solution as defined by the claims. Any feature or element of any embodiment can also be combined with features or elements from other inventive solutions to form another unique inventive solution as defined by the claims. Therefore, it should be understood that any features shown and/or discussed in the present disclosure can be implemented individually or in any appropriate combination. Therefore, apart from the limitations imposed by the appended claims and their equivalent substitutions, the embodiments are not subject to any other limitations. In addition, various modifications and alterations can be made within the scope of protection of the appended claims.

In addition, when describing representative embodiments, the specification may have presented the methods and/or processes as a specific sequence of steps. However, to the extent that the method or process does not rely on a specific sequence of the steps described in this paper, the method or process should not be limited to the specific sequence of steps described. As those skilled in the art will appreciate, other sequences of steps are also possible. Therefore, the specific sequence of steps described in the specification should not be interpreted as limiting the claims. Furthermore, claims claiming the method and/or process should not be confined to executing their steps in the exact sequence presented. Those skilled in the art can readily appreciate that these sequences can be altered while still adhering to the spirit and scope of the embodiments described in the present application.

Unless otherwise defined, all technical and scientific terms used in this paper have the same meanings as commonly understood by those skilled in the technical field of the present disclosure. The terms used in the specification of the present disclosure are solely for the purpose of describing the embodiments and are not intended to restrict the present disclosure.

When conducting target detection in an enclosed or relatively enclosed spatial region, in some alternative embodiments, target detection can be achieved by performing region determination based on single-frame fast and slow time processing and constant false alarm rate (CFAR) detection, and point clouds obtained from angle measurement, or by identifying and determining power and other features extracted from a predetermined region in a range-azimuth (RA) map formed based on performing direction of arrival (DOA) estimation and other operations using algorithms such as Capon after single-frame fast time processing, or by detecting human breathing and heartbeat after filtering the received echo phase. For example, when target detection is achieved by performing region determination based on single-frame fast and slow time processing, CFAR detection and point clouds obtained from angle measurement, 1D-FFT (such as range-dimension FFT) processing is performed on echo signals, and then time correlation analysis is performed based on echo data, thereby achieving human target discrimination, and location determination can then be performed by combining point cloud information, to ultimately achieve in-cabin target detection.

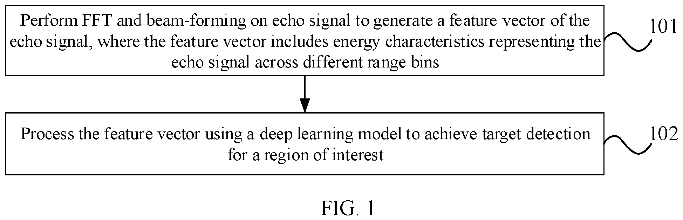

In some embodiments, the process of target detection is shown in FIG. 1. After the radar (taking the target detection of frequency modulated continuous wave (FMCW) radar as an example) performs operations such as analog-to-digital conversion and sampling on the echo signals received by the antenna, a main control module (for example, it may be implemented based on a microcontroller unit (MCU) or the like) and a baseband (BB) module (for example, it may be implemented based on a baseband chip or the like) perform further processing to achieve target detection. Within the baseband module, range dimension direct current removal (Range DC removal) and range-dimension Fourier transform (Range FFT, also known as 1D-FFT or fast time domain FFT) are performed in sequence. Then, the baseband module sends the signal to a main control module for multi-frame integration. When the data integrates to a preset number of frames, such as 128 frames, the main control module transfers the integrated multi-frame data from a static random-access memory (SRAM) of the CPU to the baseband module. Subsequently, Doppler DC removal, inter-frame Fourier transform (Frame FFT), inter-channel integration (such as non-coherent integration, and coherent integration) are performed based on the baseband module. Then, CFAR detection (for example, CFAR detection with peak selection) is performed based on the noise obtained from noise estimation (such as using a noise variance estimator) in the baseband module. At last, angle detection and target classification are performed to obtain range, speed, and/or angle information of the target.

The relevant steps in FIG. 1 can be implemented in the following ways.

Range DC removal targets the data corresponding to each chirp in each frame of data. Range DC removal specifically includes: calculating the average of the data collected by each receive (RX) channel for each chirp along the fast time domain, and then subtracting the DC component from all sampling points of each RX channel.

Range FFT: may be achieved by windowing the data after Range DC removal and then performing 1D-FFT.

It should be noted that during target detection, each chirp data in each frame of data obtained by radar through ADC or sampling based on the echo signal undergoes the aforementioned operations and is then sent to the main control module. Sending the data to the main control module may be achieved by transferring the data from direct memory access (DMA) to the SRAM of the CPU.

Doppler DC removal may be achieved by calculating a complex average along the frame dimension for multiple frames of data integrated on the main control module (i.e., averaging the data from the same range bin of the same channel across different frames), obtaining the average values for different channels and different ranges as the DC components for the corresponding range bins of the corresponding channels, and subtracting the respective DC component for each range bin of each channel.

Frame FFT may be achieved by windowing the data after Doppler DC removal along the frame dimension and performing 2D-FFT along the frame dimension. In this case, the range-Doppler information of each transmitting and receiving channel can be obtained. For example, in some embodiments, it can be achieved in the following way. After performing range-dimension FFT on the echo signal, the results obtained from the range-dimension FFT are subjected to sliding windowing, and the windowed data is then subjected to 2D FFT (Doppler FFT) to obtain the Range-Doppler map; where the duration of the sliding window corresponding to the same order of magnitude as the period of the target's periodic motion. By performing digital signal processing on multiple frames of data with similar periods to the target's periodic motion, it is possible to better detect the target by combining the characteristics of the target's motion period. This not only avoids errors and omissions but also helps to exclude the influence from multipath, thereby improving the accuracy of target detection.

Non-coherent integration may be achieved through the following expression:

$$\mathrm{P}(\mathrm{r},\mathrm{v}) = \sum_{t=0}^{N_t}\sum_{a=0}^{N_r}|s(r,t,a,v)|^2\,/N_t/N_r;$$

or

$$A(\mathrm{r},\mathrm{v}) = \sum_{t=0}^{N_t}\sum_{a=0}^{N_r}|s(r,t,a,v)|\,/N_t/N_r;$$

where, P(r,v) and A(r,v) represent the power and amplitude at the rth range bin and the vth Doppler bin, respectively, s(r,t,a,v) represents a complex value obtained by performing Frame FFT on the echo signal in the tth transmitting channel and the ath receiving channel of the rth range bin and the vth Doppler bin.

CFAR detection based on the noise floor obtained from noise estimation has been described in existing CFAR techniques, and further details are omitted here for brevity.

Angle detection may be achieved by performing azimuth-dimension digital beam-forming (DBF) and DOA, and pitch-dimension DBF and DOA on the target points obtained from CFAR, where DBF and DOA have been described in existing DBF and DOA technologies, and further details are omitted here for brevity.

Target classification may be achieved by counting the target points detected in each frame (or preset data amount, i.e., each time) according to a preset (or divided) regional unit design, and determining the counting results according to preset rules to determine whether there are physical targets of interest (such as adults, children, infants, or pets) present in the processing, and to determine their location region.

It should be noted that for radar systems with a baseband module and a main control module, FIG. 1 serves only as an example. Specifically, frame data integration, target classification (which may be achieved using techniques such as Region HIST and classification), and other operations are performed in the main control module, while other operations, such as Range DC removal and Doppler DC removal, are performed in the baseband module. In other embodiments, frame data integration may be performed in the baseband module, and Doppler DC removal may be performed in the main control module.

It should also be noted that in FIG. 1, only 128 frames of data are cached for illustration purposes. In other embodiments, 56 frames of data or 32 frames, etc., may also be cached. This is not limited in the embodiments of the present application and can be determined based on requirements or hardware support capabilities. In this way, the cached multi-frame data will continue to undergo Doppler DC removal and Frame FFT to obtain a range-Doppler (RD) map.

It should also be noted that in the process shown in FIG. 1, some steps can be skipped, such as Range DC removal or windowing, and some steps can be simplified. For example, non-coherent integration can be skipped, and only one channel is subjected to CFAR detection. For another example, only some channels are selected for non-coherent integration and CFAR detection.

Furthermore, based on the aforementioned scheme, the embodiments of the present application further propose processing in combination with a deep learning model. Deeply mining target information through a deep learning model can achieve more precise target detection solutions within spatial regions such as automobile cabins, indoor spaces, and industrial plants. These solutions can effectively improve the detection rate, reduce the false alarm rate, and significantly improve the accuracy of angle estimation. Consequently, special or weak targets within the cabin, such as infants, can be accurately detected, enabling applications such as child presence detection (CPD) and safety belt reminder (SBR). It should be noted that deep learning models can be integrated into the aforementioned embodiments in various ways. The following will elaborate on different integration scenarios.

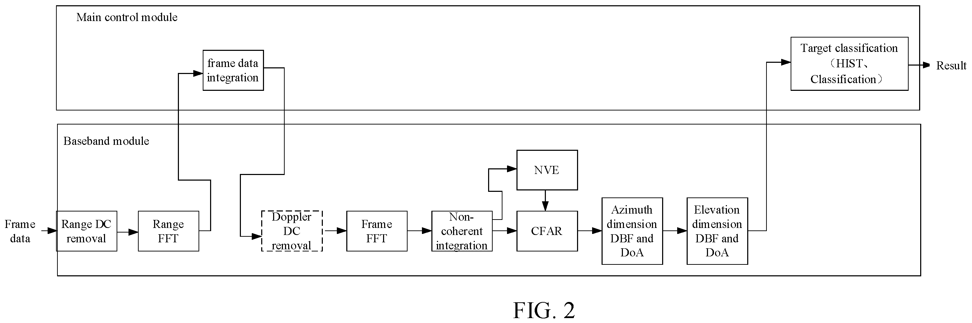

In some embodiments, as shown in FIG. 2, the method for target detection includes the following steps.

In step 101, FFT and beam-forming are performed on the echo signal to generate a feature vector of the echo signal, where the feature vector includes energy characteristics that represent the echo signal across different range bins.

In step 102, the feature vector is processed based on a deep learning model to achieve target detection in a region of interest.

In this way, beam-forming processing can effectively improve the signal-to-noise ratio of human targets to static strong clutters, enable the construction of feature vectors for empty vehicles (with or without interference), adult presence scenarios, and child presence scenarios. Deeply mining target information contained in these feature vectors through a deep learning model can achieve more precise target detection solutions within spatial regions such as automobile cabins, indoor spaces, and industrial plants. These solutions can effectively improve the detection rate, reduce the false alarm rate, and significantly improve the accuracy of angle estimation. Consequently, special or weak targets within the cabin, such as infants, can be accurately detected, enabling applications such as CPD and SBR. At the same time, by introducing the deep learning module, it is also possible to reduce the amount of digital signal processing required. For example, after extracting features, there is no need to perform CFAR, DOA, and other processing.

To better understand the embodiment shown in FIG. 2, the steps will be explained below.

In step 101, the implementation of FFT and beam-forming is not limited. It is conceivable that since beam-forming processing essentially focuses the directional gain (which reflects energy) of the signal in a specified direction, beam-forming actually extracts energy characteristics. In other words, different implementations of FFT and beam-forming do not affect the extraction of energy characteristics, and consequently not affect the generation of the feature vector that represent the energy characteristics of the echo signal across different range bins.

As shown in FIG. 1, the target detection process involves beam-forming processing to achieve angle estimation, and subsequent processing such as target classification is also required to output intuitive and accurate results. In the embodiment shown in FIG. 2, beam-forming is used to generate a feature vector, and subsequent angle estimation, target classification, etc. can be replaced by deep learning model processing, which is more efficient. Moreover, since the deep learning model does not directly use time-series data as input, but further extracts target information from echo signals through FFT and beam-forming, forming a feature vector with higher dimensions and richer information, which enables the deep learning model to better analyze and process, output more accurate results, improve the accuracy and efficiency of target detection, and achieve more accurate in-cabin target detection and recognition. Due to the fact that noise and target reflection signals possess distinct energy characteristics, using a feature vector that represents the energy characteristics can facilitate target detection with the deep learning model, outputting more accurate and reliable results.

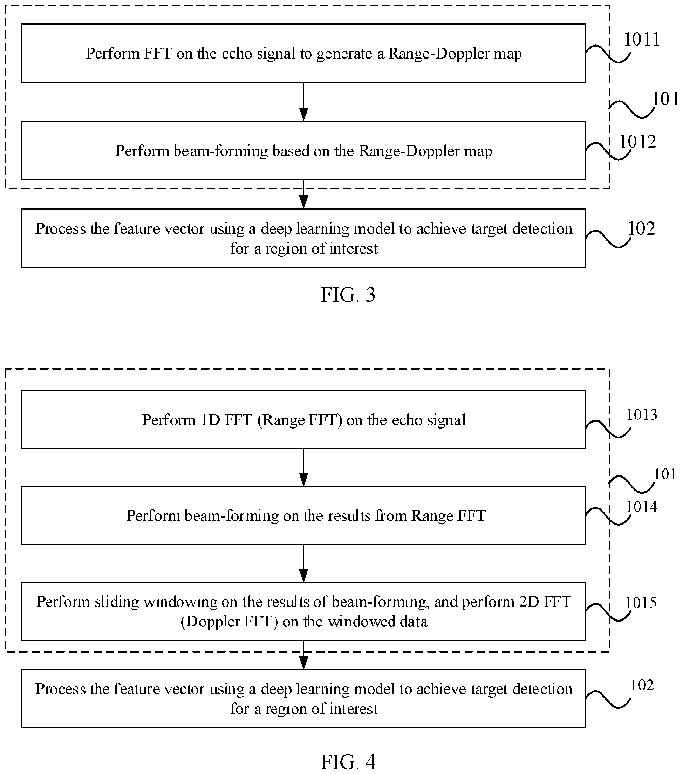

It will be appreciated that the application of the deep learning model is to replace processes such as CFAR and angle estimation and directly output detection results. That is to say, based on the process shown in FIG. 1, beam-forming is performed after Frame FFT, and the processing with deep learning model replaces coherent integration, CFAR, angle estimation, and other processes. In other words, in some embodiments, as shown in FIG. 3, FFT and beam-forming performed on the echo signal can be achieved through the following steps.

In step 1011, FFT is performed on the echo signal to generate a Range-Doppler map.

In step 1012, beam-forming is performed based on the Range-Doppler map.

It will be appreciated that, as shown in FIG. 1, FFT includes Range FFT and Frame FFT. After the Range FFT, beam-forming can be achieved without waiting for Frame FFT. Furthermore, as mentioned earlier, even if the implementation sequence of beam-forming varies, energy characteristics can still be obtained, and the feature vector can still be generated. Therefore, in some embodiments, as shown in FIG. 4, FFT and beam-forming performed on the echo signal can also be achieved through the following steps.

In step 1013, Range FFT is performed on the echo signal.

In step 1014, beam-forming is performed on the results from Range FFT.

In step 1015, sliding windowing is performed on the results of beam-forming, and 2D FFT is performed on the windowed data. Optionally, the 2D-FFT herein may also adopt the sliding window 2D-FFT.

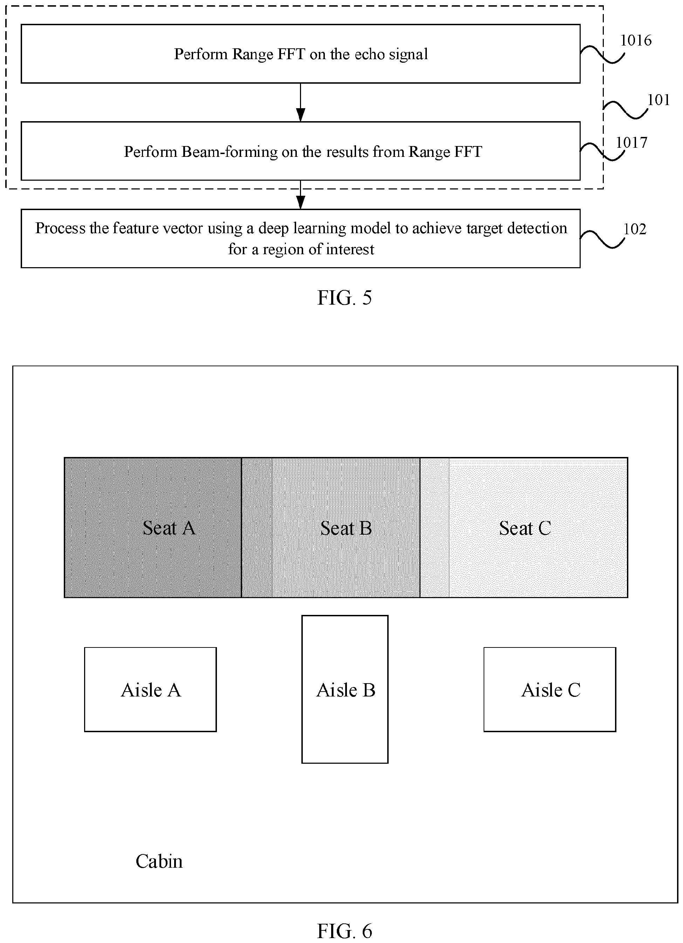

It will be appreciated that after Range FFT, beam-forming is already achievable. The subsequent Frame FFT is for better target detection through digital signal processing. A deep learning model possesses the ability to learn hidden features. Therefore, desirable target detection results and effects can still be achieved even without using Frame FFT. Based on this, in some embodiments, as shown in FIG. 5, FFT and beam-forming performed on the echo signal can also be achieved through the following steps.

In step 1016, Range FFT is performed on the echo signal.

In step 1017, beam-forming is performed on the results from Range FFT.

It should be noted that the relevant processing (including Range FFT, frame data integration, Frame FFT, etc.) performed in the embodiments shown in FIG. 3 to FIG. 5 has already been described in the embodiment shown in FIG. 2, and further details are omitted here for brevity.

Apparently, the above description is merely illustrative of implementations for FFT and beam-forming. In some embodiments, other suitable methods can also be adopted therefor, which are not listed one by one.

It will be appreciated that in the embodiments shown in FIG. 4 and FIG. 5, beam-forming is performed based on the results of Range FFT, while in the embodiment shown in FIG. 3, beam-forming is performed based on the results of Frame FFT. Therefore, the implementation methods of beam-forming will also vary. Specifically, in the embodiments shown in FIG. 4 and FIG. 5, beam-forming is achieved in the range dimension, that is, synthesis and integration are performed on different range bins. In the embodiment shown in FIG. 3, beam-forming can be achieved in both the range dimension and the Doppler dimension, that is, synthesis and integration are performed on different Doppler bins of different range bins. To facilitate understanding, the following explanation will be based on the implementation of beam-forming in the embodiment shown in FIG. 3 by way of example.

In some examples, beam-forming based on the Range-Doppler map obtained from Frame FFT (taking beam-forming at $N_c$ point as an example) can be implemented through the following expression:

$$P(r,v,b) = \sum_{c=1}^{N_c} |x(c,r,v) \cdot sv(c,b)|^2$$

where $P(r,v,b)$ represents the energy characteristics of the $v$ Doppler bin of the $r$ range bin based on beam b, $sv(c, b)$ represents a steering vector of beam b in virtual channel c, $x(c, r, v)$ represents the corresponding data of the $v$ Doppler bin of the $r$ range bin in virtual channel c in the Range-Doppler map, and $N_c$ represents the total number of beams.

Correspondingly, for beam-forming performed on data obtained from Range FFT, $x(c,r,v)$ in the above expression is replaced with $x(c, r)$ which does not include the Doppler dimension. Of course, in other embodiments, beam-forming can be implemented through other methods. Further details are omitted here for brevity.

Regarding the steering vector of the beam used in beam-forming, the embodiments of the present application do not impose any limitations on it. The steering vector may be specified by the user, or be automatically generated based on the region of interest. For example, in some embodiments, beam-forming can be achieved in the following way. determining a target direction pointing to the region of interest and generating a steering vector based on the target direction; and performing beam-forming based on the steering vector. The determination of the target direction is also not limited in the embodiments of the present application. For example, in some embodiments, determining the target direction pointing to the region of interest includes: determining the target direction based on an azimuth and an elevation of the region of interest relative to the radar. In some other embodiments, determining the target direction pointing to the region of interest includes: obtaining actual measurement data of the target in the region of interest; and clustering the actual measurement data of the target, and taking the azimuth and the elevation of a cluster center within the regions of interest as the target direction.

For instance, taking the internal space of a vehicle depicted in FIG. 6 as an example, the scenario requirements involve determining whether there is a person present in six regions in the vehicle: three rear seats and three aisles in front of the three seats. If present, it further determines whether it is an adult or a child. In this case, a 6-point DBF can be implemented, which involves determining six target directions respectively pointing to the three seats and the three aisles shown in FIG. 6. Consequently, $P(r,v,b)$ corresponding to six beams are obtained. Of course, other directions can also be added, such as adding three auxiliary beams pointing to three other regions. In this case, a 9-point DBF can be implemented to obtain $P(r, v, b)$ corresponding to nine beams.

Regarding the generation of the steering vector, it may be achieved through the following expression:

$$sv(c,b) = \exp\big(1\mathrm{j} \cdot 2\pi/\lambda \cdot (\mathrm{x_c} \cos \phi_b \sin \theta_b + \mathrm{z_c} \sin \phi_b)\big),$$

where $sv(c,b)$ represents the steering vector of beam b in virtual channel c, $\lambda$ represents the central wavelength of the radar detection signal, $x_c$ and $z_c$ respectively represent the horizontal and vertical positions of the antenna corresponding to the virtual channel $c$, $\theta_b$ represents the azimuth corresponding to the target direction, and $\phi_b$ represents the elevation corresponding to the target direction.

It should be noted that since the coverage of radar is generally larger than the range required by users for target detection, target detection generally occurs within the regions of interest of the users. Based on this, in the embodiments of the present application, target detection in regions of interest is primarily illustrated by way of example. However, this does not imply that the method for target detection provided by the embodiments of the present application is solely applicable to regions of interest. For instance, it can also be applied to all detectable regions, which is not further elaborated herein or in subsequent sections.

It will be appreciated that the input of a deep learning model can affect its accuracy. Considering that the information of the target in the echo signal also has characteristics within a certain arrangement sequence. Therefore, in order to help the deep learning model to better process the feature vector, the energy characteristics in the feature vector can be particularly arranged. Based on this, in some embodiments, generating the feature vector of the echo signal can be achieved in the following way: rearranging, according to preset rules, the energy characteristics obtained from FFT and beam-forming performed on the echo signal to obtain the feature vector. Such rearrangement can enhance the correlation of data in the feature vector, which is beneficial for the model to perform better detection.

It should be noted that the embodiments of the present application do not limit the specific rules for rearrangement. For example, in some embodiments, the preset rules include: data with the same first dimension is continuously arranged according to a progression direction of the second dimension, and the overall arrangement follows a progression direction of the first dimension, where the first and second dimensions refer to different dimensions in the beam and range dimensions, respectively. This rule corresponds to the situation where energy characteristics are generated only in the range dimension. For another example, in some embodiments, the preset rules include: data with the same third dimension and the same fourth dimension is continuously arranged according to a progression direction of the fifth dimension, data with the same third dimension is continuously arranged according to a progression direction of the fourth dimension, and the overall arrangement follows the progression direction of the third dimension, where the third, fourth, and fifth dimensions correspond to different dimensions in the beam, range, and Doppler dimensions, respectively. This rule corresponds to the situation where energy characteristics are generated in both range and Doppler dimensions.

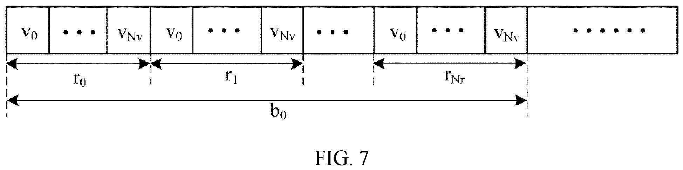

To facilitate understanding, the preset rules to rearrangement will be explained below in conjunction with the rearranged feature vector shown in FIG. 7.

As shown in FIG. 7, the energy characteristics are arranged continuously in physical memory along the v dimension, followed by the r dimension, and finally the b dimension. In the figure, v(0) and v(Nv) represent the 0th and Nvth Doppler bins (Nv+1 Doppler bins in total), r(0) and r(Nr) represent the 0th and Nrth range bins (Nr+1 range bins in total), b0 represents the 0th beam (N beams in total). The array consisting of (Nv+1)×(Nr+1)×N energy characteristics is the feature vector input to the deep learning model.

It will be appreciated that, as mentioned earlier, target detection is implemented based on hardware. Therefore, in order to adapt to the capability of the hardware, data processing can also be performed to accommodate the capability of the hardware.

For example, in some embodiments, generating the feature vector of the echo signal can be achieved in the following way: performing logarithmic normalization on the energy characteristics obtained from FFT and beam-forming performed on the echo signal. By using logarithmic normalization, the data is converted from floating-point numbers to fixed-point numbers, which is beneficial for improving the efficiency of subsequent processing, thereby enhancing the efficiency of target detection.

For example, in some embodiments, performing logarithmic normalization on the energy characteristics obtained from FFT and beam-forming performed on the echo signal can also be achieved in the following way: logarithmically transforming the energy characteristics obtained from FFT and beam-forming performed on the echo signal, and linearly normalizing the logarithmically transformed results by using preset upper and lower bound constraints. Based on the logarithmic normalization, upper and lower bounds as well as linear parameters are further introduced, so that the data format is further optimized, which is more beneficial for forming feature data for subsequent use.

Logarithmically transforming the energy characteristics obtained from FFT and beam-forming performed on the echo signal and linearly normalizing the logarithmically transformed results by using preset upper and lower bound constraints can be achieved through the following expression:

$$
P_{norm}(r, v, b) = \begin{cases} P_{max}, & \frac{\log_2(P(r,v,b)) - b_0}{a_0} \leq P_{max} \\ \frac{\log_2(P(r,v,b)) - b_0}{a_0}, P_{min} \leq \frac{\log_2(P(r,v,b)) - b_0}{a_0} \leq P_{max} \\ P_{min}, & \frac{\log_2(P(r,v,b)) - b_0}{a_0} < P_{min} \end{cases}
$$

where $P_{norm}(r, v, b)$ represents the logarithmic normalization result, $P(r,v,b)$ represents the energy characteristic of beam $b$ at the range bin $r$ and the Doppler bin $v$, and $a_0$, $b_0$, $P_{max}$, and $P_{min}$ are all preset parameters.

It should be noted that the embodiments of the present application do not limit the specific values of the aforementioned preset parameters. In some possible embodiments, $b_0$ may be set as the mean or median of all possible values of $\log_2(P(r, v, b))$. Alternatively, in some embodiments, $a_0$ may be set as the difference between the 95% quantile and the 5% quantile of all possible values of $\log_2(P(r, v, b))$, divided by 256. This can normalize $P_{norm}(r, v, b)$ to a range of -127 to 127, which is the range of fixed-point numbers.

It should be noted that the above is merely an illustrative example of related data processing. In some embodiments, alternative processing methods can be utilized. For instance, when taking logarithms, one could use 10 instead of 2 as the base. Using 2 as the base can normalize the data to a range of -127 to 127 through the aforementioned expression. Using other numbers as the base or other processing methods can yield similar effects. Alternatively, instead of quantization, converting data to double-precision floating point or single-precision floating point, such as int32, int16, int8, or uint32, uint16, uint8, etc., can also enhance subsequent processing efficiency. Further details are omitted here for brevity.

The normalization embodiments provided in the aforementioned embodiments may be implemented using various forms. For instance, the normalization may be implemented in MCU after complex data is transferred to Mem of MCU via DMA. Alternatively, the normalization may be implemented using a hardware engine in BB and then directly transferred to Mem of MCU via DMA. Alternatively, a portion of the normalization may be implemented in BB, and the remaining calculations are performed in the MCU after transferred to Mem of MCU via DMA. For example, modulo square operation and taking logarithms with 2 as the base can be implemented in BB, and subtraction, division, and saturation truncation can be implemented in MCU. Further details are omitted here for brevity.

In step 102, what kind of deep learning model is used is not limited. It can be any deep learning model, such as convolutional neural networks (CNN) or Transformer. Further details are omitted here for brevity.

It will be appreciated that the processing procedure and result output of the deep learning model can be adjusted through the structural setting of the deep learning model and the training of the model.

For example, in some embodiments, the target detection result is a confidence matrix where the elements correspondingly indicate at least one of the following items of information: confidence level of detecting the presence of target, confidence level of the presence of target within the corresponding region of interest, confidence level of the presence of an adult target within the corresponding region of interest, and confidence level of the presence of a child target within the corresponding region of interest.

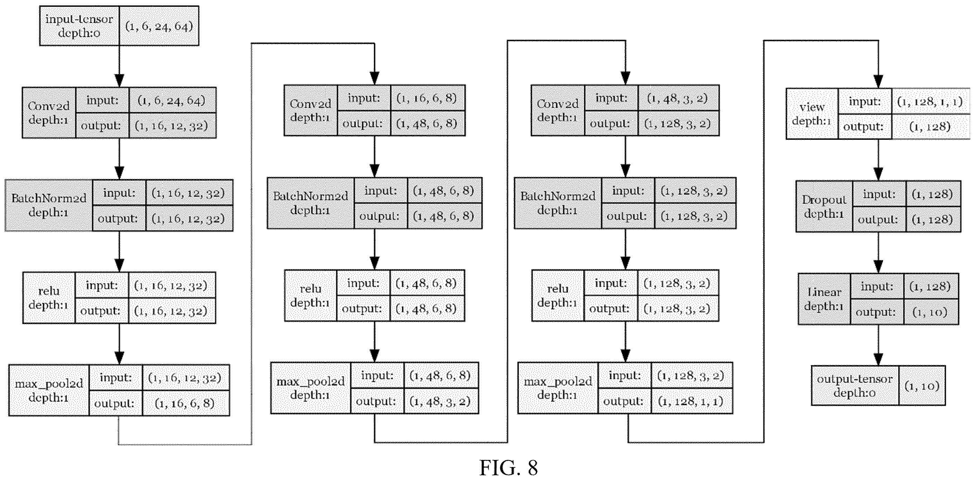

Further, in some embodiments, the structure of the deep learning model is a CNN with 3 convolutional kernels, and the type, input, and output sizes of each layer are shown in FIG. 8. In this case, the dimension of input features of the deep learning model is 6×64×20, corresponding to 6 beam directions, 64 Doppler bins, and 20 range bins. Each convolution operation includes a two-dimensional convolution layer, a batch normalization layer, a ReLu nonlinear activation layer, and a max pooling layer. After performing 3 times of convolution operations, the resulting feature vector of $128 \times 2$ is flattened into a one-dimensional feature vector of $256 \times 1$. After random dropout, the vector passes through a fully connected layer of $256 \times 10$ to obtain the detection results (for example, whether there is a person inside the vehicle, and confidence level of the presence of adults or children on each seat and aisle inside the vehicle.

In this case, it will be appreciated that further processing can be applied on the output from the deep learning model before it is presented to the user. For instance, taking the internal space of a vehicle depicted in FIG. 6 as an example, assuming that the output of the deep learning model is as follows: a vector yi of $1 \times 10$ indicating whether there is a person inside the vehicle, and the respective confidence levels of whether there are children on the three seats, whether there are children on the three aisles, and whether there are adults on the three seats. In this case, the following determination can be further performed. If yi(1) > 0, it is directly determined that there is no person inside the vehicle without considering other elements of yi. Alternatively, if yi(k) = 0, k = 1, 2, ..., 10, it is determined that there is no person inside the vehicle. If there exists yi(k)>0 k=2, 3, ..., 10, it is determined that there is a child or adult in the corresponding region. If the confidence levels of presence of adults and children on seat A and aisle A are both greater than 0, it is only determined that adults are present on seat A. The same logic applies to seat B and aisle B, as well as seat C and aisle C. If yi=[-0.1, 7.2, -5, -7.2, -1.5, -1.9, -3.1, -6.4, -6.2, -5.5], it is determined that there is a child on seat A. If yi=[-0.1, -5, -4.2, 7.2, -1.5, -1.9, -3.1, 6.4, -6.2, -5.5], it is determined that there is a child on aisle C and an adult on seat A. If yi = [-0.1, -5, -4.2, 7.2, -1.5, -1.9, -3.1, -6.4, -6.2, 5.5], it is determined that there is an adult only on seat C. If yi = [0.1, -5, -4.2, 7.2, -1.5, -1.9, -3.1, 6.4, -6.2, -5.5], it is determined there is no person inside the vehicle. In this case, the scenario that there are multiple people inside the vehicle can be successfully determined, and the false alarm rate can be significantly reduced, but there is a slight increase in the risk of missed detection.

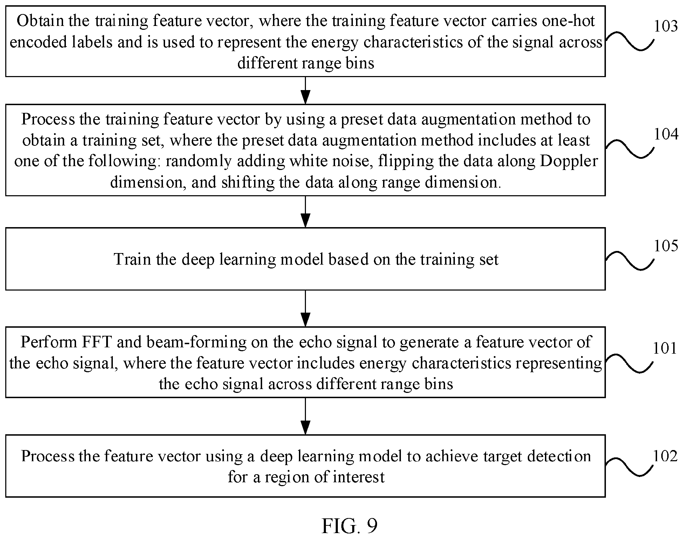

Regarding the training method of the deep learning model, in some embodiments, as shown in FIG. 9, before processing the feature vector based on the trained deep learning model to obtain the target detection results output by the deep learning model, the method further includes the following steps.

In step 103, the training feature vector is obtained, where the training feature vector carries one-hot encoded labels and is used to represent the energy characteristics of the signal across different range bins.

In step 104, the training feature vector is processed using a preset data augmentation method to obtain a training set. The preset data augmentation method includes at least one of the following: randomly adding white noise, flipping the data along Doppler dimension, and shifting the data along range dimension.

In step 105, the deep learning model is trained based on the training set.

To facilitate a better understanding of the aforementioned embodiments by those skilled in the art, the following will provide illustrative examples of training the deep learning model.

Firstly, training feature vectors are obtained according to the aforementioned method of obtaining the feature vector, and multiple sets of processed data from multiple experiments are integrated to construct an input feature dataset S {P}, where each element $P_i$ is the aforementioned $(N_v + 1) \times (N_r + 1) \times N$ array.

Then, $\mathcal{S}\{\mathcal{P}\}$ is labeled according to the experimental conditions, meaning that corresponding label $L_i$ is generated for $P_i$, obtaining a labeled input feature dataset $\mathcal{S}\{\mathcal{P}, \mathcal{L}\}$. In this case, one-hot encoding can be used to generate the label $L_i$. Taking the interior scene shown in FIG. 6 as an example, if we consider determining whether there are persons on the three rear seats and three aisle regions in the vehicle, and also consider classifying adults and children, without considering the scenario where adults squat in the three aisle regions, then we have a total of 10 classification problems, and $L_i$ is a $1 \times 10$ vector with values of 0 or 1. The first bit of $L_i$ indicates whether there is a person inside the vehicle. If there is no person, this bit is 1; and if there is a person, this bit is 0. The 2nd to 4th bits indicate whether there is a child on seat A to seat C. If there is a child, the corresponding bit is 1; and if not, the corresponding bit is 0. The 5nd to 7th bits indicate whether there is a child on aisle A to aisle C. If there is a child, the corresponding bit is 1; and if not, the corresponding bit is 0. The 8nd to 10th bits indicate whether there is an adult on seat A to seat C. If there is an adult, the corresponding bit is 1; and if not, the corresponding bit is 0. If there is no person inside the vehicle, then the corresponding $L_i$ is [1, 0, 0, 0, 0, 0, 0, 0, 0, 0]. If there is an adult on seat A in the vehicle, the corresponding $L_i$ is [0, 0, 0, 0, 0, 0, 0, 1, 0, 0]. If there is a child on aisle A and an adult on seat B in the vehicle, the corresponding $L_i$ is [0, 0, 0, 0, 1, 0, 0, 0, 1, 0]. It should be noted that the first bit of $L_i$, which indicates whether there is a person inside the vehicle, can be omitted. That is, $L_i$ can be a $1 \times 9$ vector. When all its elements are zero, it indicates that there is no person inside the vehicle.

Next, one or more methods, such as randomly adding white noise to $\mathcal{S}\{\mathcal{P}, \mathcal{L}\}$, randomly flipping the data along Doppler dimension, and randomly slightly shifting the data along range dimension, are applied to augment the data, obtaining an augmented dataset $\mathcal{S}'\{\mathcal{P}, \mathcal{L}\}$. Thus, the sample size of the augmented dataset is significantly increased compared to the original dataset. For example, in $\mathcal{S}\{\mathcal{P}, \mathcal{L}\}$, there are 5000 samples each for empty vehicle, child presence, and adult presence. These samples can undergo 10 rounds of data augmentation to obtain an augmented dataset $\mathcal{S}'\{\mathcal{P}, \mathcal{L}\}$ with 50000 samples for each category (which can optionally include or exclude the original dataset $\mathcal{S}\{\mathcal{P}, \mathcal{L}\}$. $\mathcal{S}'\{\mathcal{P}, \mathcal{L}\}$ can also be randomly sorted, and a proportion of $\mathcal{S}'\{\mathcal{P}, \mathcal{L}\}$ with $\alpha = 0.3$ is taken as a validation dataset

$\mathcal{S}_v\{\mathcal{P}, \mathcal{L}\}$ while the remaining data serves as a training dataset $\mathcal{S}_t\{\mathcal{P}, \mathcal{L}\}$.

Then, the deep learning model is trained in the following way:

constructing an uninitialized CNN model and randomly initializing its parameters for each layer;

cycling the following steps 20 times (each time is called an epoch):

randomly partitioning $\mathcal{S}_t\{\mathcal{P}, \mathcal{L}\}$ into $N_b$ batches, with each batch containing $N_s$ samples, and performing the following steps for each batch:

performing one or more data augmentation processes on each batch of data, such as randomly adding white noise, randomly flipping the data along Doppler dimension, and randomly slightly shifting the data along range dimension;

feeding the augmented data into the CNN for forward computation, obtaining three types of confidence levels: an empty vehicle, presence of a child, and presence of an adult, and obtaining corresponding loss $CE_t$ based on loss function;

performing backpropagation on the CNN model, and updating the parameters of each layer of the CNN based on a gradient descent optimization algorithm;

performing, after the above operations are performed on all samples of $\mathcal{S}_t\{\mathcal{P}, \mathcal{L}\}$, forward computation on all samples of $\mathcal{S}_v\{\mathcal{P}, \mathcal{L}\}$ with the updated CNN, to obtain loss $CE_v$ for $\mathcal{S}_v\{\mathcal{P}, \mathcal{L}\}$, and if $CE_v$ fails to decrease within the set $N_{es}$ cycles, terminating the cycle in advance;

selecting the CNN model with the minimum $CE_v$ in its cycle as the final model output.

During the training process, Adam Optimizer can be used as the gradient descent optimizer, and cross entropy can be selected as the loss function. However, when the network outputs, sigmoid normalization should be applied before using cross entropy for loss calculation. The learning rate is set to 0.001, the weight decay is set to 0.0001, $N_s$ is set to 128, and $N_{es}$ is set to 5.

Of course, the above is merely an illustrative example of the deep learning model. In other implementations, models with different structures, CNNs with varying parameters, or different training parameters or methods can be adopted. Further details are omitted here for brevity.

It should be noted that the aforementioned embodiments are merely illustrative examples. In some embodiments, the assignment of outputs and labels can also be implemented in other forms rather than using one-hot encoding. For instance, if only considering scenarios with no one or only one person inside the vehicle, Li=1, 2, ..., 10 can be directly generated as labels, and the bit where the generated yi has its maximum value can be identified as the detection and identification result. Further details are omitted here for brevity.

It will be appreciated that radar has a large coverage range, but users do not necessarily have a detection need for its entire coverage range. Therefore, in some embodiments, the feature vector is used to represent the energy characteristics of the echo signal across different range bins within a preset Range bin index range and/or preset Doppler bin index range. For example, when performing beam-forming, only data from some Doppler bins and range bins are used, such as the 0-32 and 96-127 Doppler bins, and the 10-42 range bins. This approach retains only the parts that are of interest to the user, thereby reducing the occupation of computational and storage resources and improving detection efficiency.

To facilitate a better understanding of the application of the method for target detection provided in the above embodiments in the radar target detection process by those skilled in the art, the following explanation is provided by taking the application of the embodiment shown in FIG. 3 to FIG. 5 as an example.

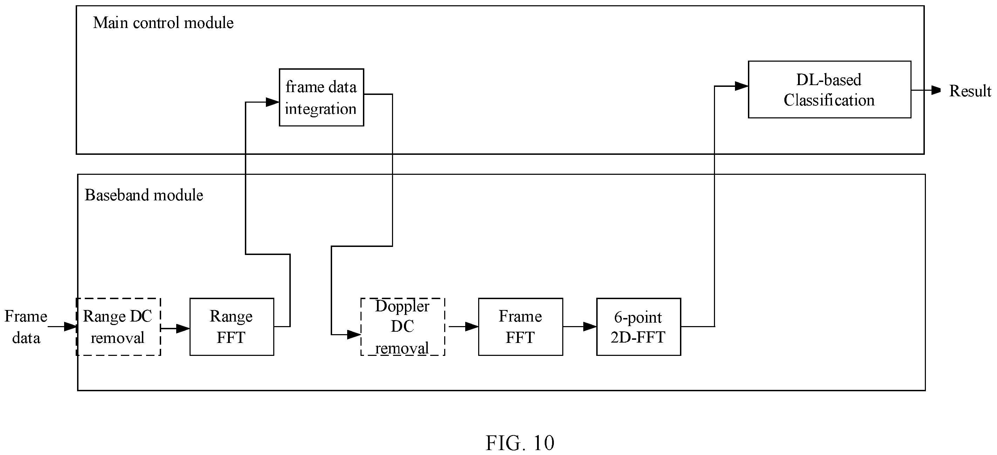

The embodiment shown in FIG. 3 is as shown in FIG. 10 after being applied in the complete target detection process. That is, based on the process shown in FIG. 1, after Frame FFT, two-dimensional digital beam-forming (2D-DBF) and DL-based classification are directly performed. That is, instead of performing CFAR after Frame FFT, 2D-DBF are performed on the azimuth and pitch dimensions for each region of interest (or unit zone) to obtain the corresponding number of RD maps to the regions of interest. Subsequently, the aforementioned RD maps are input into the constructed deep learning (DL) model for target determination. In some alternative embodiments, the relationship between the aforementioned regions of interest and the RD maps may also be one-to-many, meaning that at least two RD maps can be derived from a single region of interest. The specific number can be adjusted based on actual needs.

The aforementioned DL input can be the amplitude or power in linear or dB domain, and can undergo normalization and other operations. Besides, the constructed deep learning model can classify based on the input, and the categories it can classify into are: whether there are objectives, the attributes of the objectives, and the specific unit zone position (i.e., regional locations) where each objective is located.

For example, when considering the application scenario where the rear region of the automobile is the region of interest, also known as the target region (as shown in FIG. 6), and it is divided into three seat regions (zone units) and their corresponding three aisle regions, after Frame FFT, the center positions of the aforementioned six regions of interest (the regions of interest may be limited to the three seat regions) can undergo 2D-DBF in azimuth and pitch dimensions to obtain six RD maps (or three RD maps) corresponding to the regions of interest. At least some regions of the aforementioned six RD maps (or three RD maps) are input into the constructed deep learning model for target determination and identification. For example, the constructed deep learning model classifies based on the input to determine whether there is a living target in the aforementioned regions of interest. If there is a living target, it can further determine whether the living target is an adult, child, infant, pet, etc., and can further determine the specific location information such as which seat or aisle region the living target is in.

In the process shown in FIG. 10, the method for target detection is a model-data dual-driven processing flow. It has relatively low requirements for signal processing and can effectively avoid steps such as the selection of signal processing parameters and region parameters, and the design of CFAR logic and region determination logic, thereby significantly reducing the difficulty of scheme implementation and design.

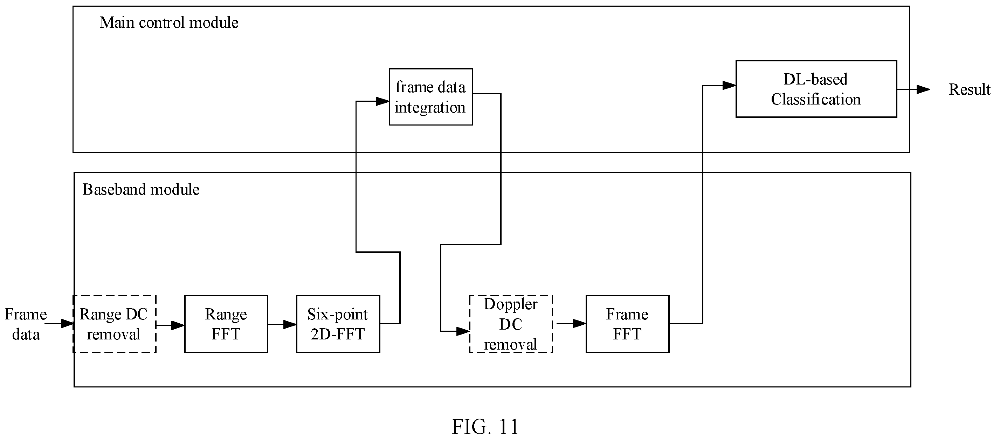

The embodiment shown in FIG. 4 is as shown in FIG. 11 after being applied in the complete target detection process. As shown in FIG. 11, based on the process shown in FIG. 1, after Range FFT (also known as 1D-FFT), 2D-DBF is performed first, and the frame data integration and Frame FFT are then performed. That is, before performing Frame FFT, the center positions of the regions of interest (such as the three seat regions) undergo 2D-DBF in azimuth and elevation dimensions. This embodiment enables a parallel processing scheme for data processing and wave transmission time, thereby effectively reducing processing time.

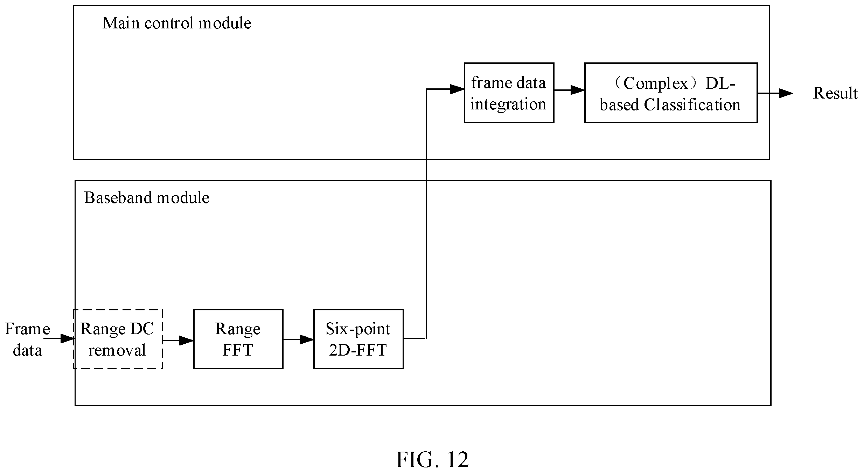

The embodiment shown in FIG. 5 is as shown in FIG. 12 after being applied in the complete target detection process. As shown in FIG. 12, based on the process shown in FIG. 1, after Range FFT (also known as 1D-FFT), 2D-DBF is performed to achieve the frame data integration, and complex DL-based classification is directly performed. That is, in the entire target detection process, Frame FFT is not performed. After 1D-FFT, the center positions of the regions of interest (such as the three seat regions) directly undergo 2D-DBF to obtain the corresponding number of range-frame maps (such as three range-frame maps), and then the above range-frame maps are input into the constructed (for example, complex) deep learning model for target identification and determination.

The embodiment shown in FIG. 12 can effectively reduce the computational load by avoiding Frame FFT. Moreover, if a complex deep learning model is utilized, higher processing gains compared to FFT can be achieved, thereby enhancing the performance of target detection. In addition, this embodiment effectively shortens the processing hierarchy, facilitating efficient scheduling operations therefor.

As can be seen from the above, in the processes shown in FIG. 4 and FIG. 6, combining 2D-FFT with DL-based classification can effectively enhance the accuracy of target identification. Besides, the steps of 2D-FFT and DL-based classification can be flexibly arranged between various steps in signal processing according to actual needs. For example, the steps of 2D-FFT may be arranged after Range FFT or Frame FFT.

It should be noted that in the aforementioned embodiments, all FFT processes may be windowed FFT, and may also be implemented using SVA combined with FFT. Alternatively, multi-frame sliding window FFT may be replaced with other time-frequency transformation processes, such as short-time Fourier transform and fractional Fourier transform, which can also achieve effective detection of the target of interest. Alternatively, multi-frame sliding window FFT may be replaced with high-pass FIR, Comb FIR, or a filter optimized based on an optimization function, thereby achieving similar or even higher performance with fewer hardware resources compared to multi-frame FFT. Alternatively, DBF may be replaced with algorithms such as Capon, MUSIC, ESPRIT, and their variants. Additionally, beam-forming at the center of the region of interest can be optimized and/or antenna arrangement can be optimized to further enhance the performance of target detection of the system.

It should also be noted that the embodiments shown in FIG. 10 to FIG. 12 are merely schemes for target detection in combination with multi-frame integration technology. However, this does not imply that multi-frame integration is necessarily combined. For instance, in the embodiment shown in FIG. 12, inter-frame integration is omitted. Of course, there are other examples, and further details are omitted here for brevity.

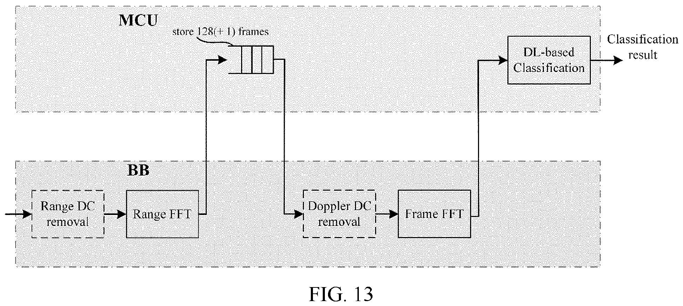

As shown in FIG. 13 to FIG. 21, the embodiments of the present application also provide another method for target detection. By utilizing inter-frame integration combined with deep learning, coherent integration is performed for the frequency of human respiration, thereby improving the signal-to-noise ratio of human targets to static strong clutters and effectively constructing feature data for empty vehicle (with or without interference), adult presence scenarios, and child presence scenarios. Besides, by combining deep learning models, deep information mining can be performed on the constructed feature data, thereby achieving effective detection of whether there is a person inside the vehicle and accurate determination of adults and children. This can enable more accurate detection and identification of targets in spatial regions such as automobile cabins, indoor spaces, and industrial plants. Compared to point cloud information based on signal processing, data features utilized by the method proposed in this embodiment have higher dimensionality and richer information, which can achieve more accurate in-cabin target detection and identification. Specifically, as shown in FIG. 13, the method for target detection includes the following steps.

In step S11, DC removal is performed for each chirp data in each frame. For example, DC removal can be performed on the downlink ADC data in BB. Optionally, it includes: calculating the average of the data collected by each receive (RX) channel for each chirp along the fast time domain, and then subtracting the DC component from all sampling points of each RX channel; then windowing the data after DC removal, and subsequently performing 1D-FFT to obtain range dimension information, then transferring the 1D-FFT data is transferred from BB to SRAM of CPU for cache via DMA; and finally performing the same operations mentioned above for different chirps.

In step S12, when the data cached in the SRAM of CPU reaches a certain number of frames, such as 128 frames, the 128 frames of data are transferred from the SRAM of CPU to BB via DMA, and the following steps are executed.

Firstly, DC removal is performed on multi-frame 1D data: calculating the complex average along the frame dimension for these 128 frames of data, obtaining the average values for different channels and different ranges as their DC components, and then subtracting the DC component from each channel and each range bin.

Secondly, the data after DC removal is windowed along the frame dimension, and 2D-FFT calculation is performed along the frame dimension, to obtain the range-Doppler complex value x(c, r, v) of each transmitting and receiving channel.

Afterwards, some Doppler bins and range bins are selected, such as selecting the 0-32 and 96-127 Doppler bins, and 10-42 range bins. The energy of the complex value x(c,r,v) for each range bin and each Doppler bin in each channel is calculated, then log operation and normalization are performed thereon. The mathematical form is as follows:

$$P(c, r, v) = \begin{cases} P_{max}, & \frac{\log_2(|x(c,r,v)|^2) - b_0}{a_0} \leq P_{max} \\ \frac{\log_2(|x(c,r,v)|^2) - b_0}{a_0}, P_{min} \leq & \frac{\log_2(|x(c,r,v)|^2) - b_0}{a_0} \leq P_{max} \\ P_{min}, & \frac{\log_2(|x(c,r,v)|^2) - b_0}{a_0} < P_{min} \end{cases}$$

where P(c,r,v) represents the normalized "energy" of the virtual channel c at the range bin r and the Doppler bin v, $b_0$ and $a_0$ are preset normalization parameters, while $P_{max}$ and $P_{min}$ are preset upper and lower limits for P(c,r,v). Generally, the same values of $b_0$, $a_0$, $P_{max}$, and $P_{min}$ are selected for different c, r, v (different c, v, and r partitions may require different values of $b_0$, $a_0$, $P_{max}$, and $P_{min}$ in possible variations). In one possible implementation, $b_0$ may be set as the mean or median of all possible values of $\log_2(|x(c, r, v)|^2)$, and $a_0$ may be set as the difference between the 95% quantile and the 5% quantile of all possible values of $\log_2(|x(c, r, v)|^2)$, divided by 256. This can normalize P(c,r,v) to a range of -127 to 127.

Then, P(c,r,v) is rearranged into the form shown in FIG. 7, which is continuous in physical memory along the v dimension, followed by the r dimension, and finally the c dimension. In the figure, v(0) and v(Nv) represent the 0th and Nvth Doppler bins (Nv+1 Doppler bins in total), r(0) and r(Nr) represent the 0th and Nrth range bins (Nr+1 range bins in total), and c0 represents the 0th virtual channel (Nc+1 virtual channels in total). The array consisting of $(Nv + 1) \times (Nr + 1) \times (Nc + 1)$ elements is the input feature data for the deep learning model.

Finally, the aforementioned data is fed into the constructed deep learning model to determine whether there is a person inside the cabin and whether it is an adult or a child, and the results are outputted.

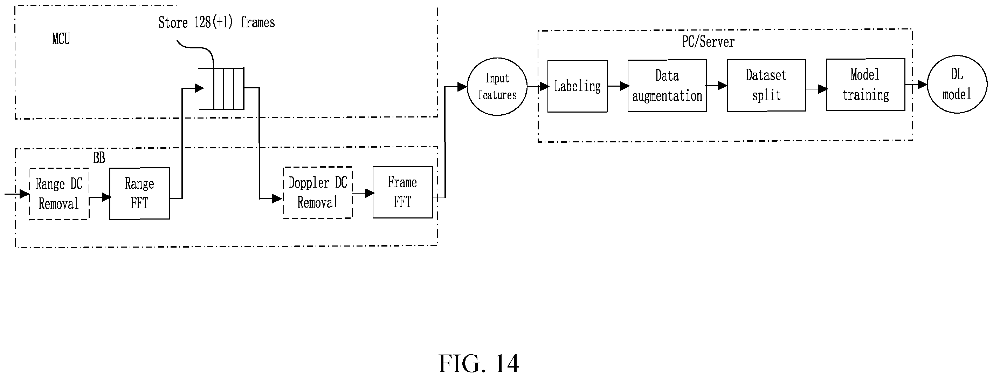

It should be noted that the deep learning model may be either a CNN or a Transformer. An embodiment of the construction process of this model is shown in FIG. 14, including the following steps.

In step S21, the input feature data is obtained from the same steps as described above, multiple sets of processed data from multiple experiments are integrated to construct an input feature dataset S{P}, where each element $P_i$ is a $(Nv + 1) \times (Nr + 1) \times (Nc + 1)$ array as defined in the above step 2.c.

In step S22, $\mathcal{S}\{\mathcal{P}\}$ is labeled according to the experimental conditions, meaning that corresponding label $L_i$ is generated for $P_i$, obtaining a labeled input feature dataset $\mathcal{S}\{\mathcal{P}, \mathcal{L}\}$.

In step S23, one or more methods, such as randomly adding white noise to $\mathcal{S}\{\mathcal{P}, \mathcal{L}\}$, randomly flipping the data along Doppler dimension, and randomly slightly shifting the data along range dimension, are applied to augment the data, obtaining an augmented dataset $\mathcal{S}'\{\mathcal{P}, \mathcal{L}\}$. It is noted that the sample size of the augmented dataset is significantly increased compared to the original dataset. For example, in $\mathcal{S}\{\mathcal{P}, \mathcal{L}\}$, there are 5000 samples each for empty vehicle, child presence, and adult presence. These samples can undergo 10 rounds of data augmentation to obtain an augmented dataset $\mathcal{S}'\{\mathcal{P}, \mathcal{L}\}$ with 50000 samples for each category (which can optionally include or exclude the original dataset $\mathcal{S}\{\mathcal{P}, \mathcal{L}\}$).

In step S24, $\mathcal{S}'\{\mathcal{P}, \mathcal{L}\}$ is randomly sorted, and a proportion of $\mathcal{S}'\{\mathcal{P}, \mathcal{L}\}$ with $\alpha = 0.3$ is taken as a validation dataset $\mathcal{S}_v\{\mathcal{P}, \mathcal{L}\}$ while the remaining data serves as a training dataset $\mathcal{S}_t\{\mathcal{P}, \mathcal{L}\}$.

In step S25, the deep learning model is trained based on $\mathcal{S}_t\{\mathcal{P}, \mathcal{L}\}$ and $\mathcal{S}_v\{\mathcal{P}, \mathcal{L}\}$.

Optionally, the main steps of one embodiment are as follows.

First, construct an uninitialized CNN model and randomly initializing its parameters for each layer,

Then, cycle the following steps 20 times (each time is called an epoch): randomly partitioning $\mathcal{S}_t\{\mathcal{P}, \mathcal{L}\}$ into $N_b$ batches, with each batch containing $N_s$ samples, and performing the following steps for each batch: first performing one or more data augmentation processes on each batch of data, such as randomly adding white noise, randomly flipping the data along Doppler dimension, and randomly slightly shifting the data along range dimension, then feeding the augmented data into the CNN for forward computation, obtaining three types of confidence levels: empty vehicle, child presence, and adult presence, and obtaining corresponding loss CEt based on loss function; and finally performing backpropagation on the CNN model, and updating the parameters of each layer of the CNN based on a gradient descent optimization algorithm. Then perform, after the above operations are performed on all samples of $\mathcal{S}_t\{\mathcal{P}, \mathcal{L}\}$, forward computation on all samples of $\mathcal{S}_v\{\mathcal{P}, \mathcal{L}\}$ with the updated CNN, to obtain loss $CE_v$ for $\mathcal{S}_v\{\mathcal{P}, \mathcal{L}\}$, and if $CE_v$ fails to decrease within the set $N_{es}$ cycles, terminate the cycle in advance.

Then, select the CNN model with the minimum $CE_v$ in its cycle as the final model output.

It should be noted that during the model training process, Adam Optimizer can be used as the gradient descent optimizer, and cross entropy can be selected as the loss function. The learning rate is set to 0.001, the weight decay is set to 0.0001, $N_s$ is set to 128, and $N_{es}$ is set to 5.

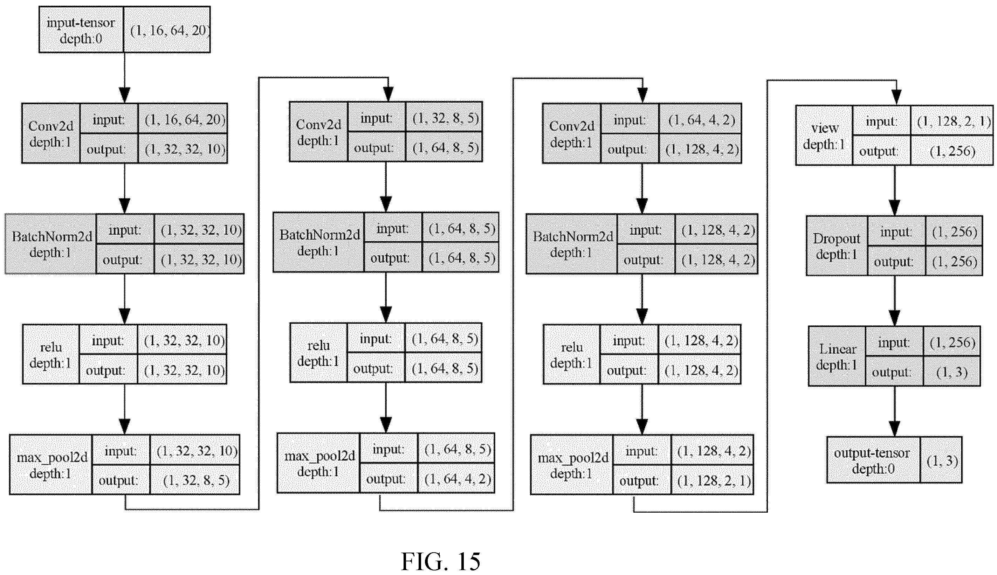

As shown in FIG. 15, a possible CNN structure is as follows. Shown is a CNN with 3 convolutional kernels, and the type, input and output sizes of each layer are also shown in the diagram. As shown in the diagram, the dimension of input features is $16 \times 64 \times 20$, corresponding to 16 beam directions, 64 Doppler bins, and 20 range bins. Each convolution operation includes a two-dimensional convolution layer, a batch normalization layer, a ReLu nonlinear activation layer, and a max pooling layer. After performing 3 times of convolution operations, the resulting feature vector of $128 \times 2$ is flattened into a one-dimensional feature vector of $256 \times 1$. After random dropout, the vector passes through a fully connected layer of $256 \times 3$ to obtain three types of confidence levels: empty vehicle, child presence, and adult presence. The maximum value of the confidence levels can be obtained from softmax calculation, which serves as a classification for the input, determining whether it belongs to the category of empty vehicle, child presence, and adult presence.

It should be noted that:

1. The method in this embodiment differs from the existing radar signal processing method, which involves slow time processing between chirps. The method involves accumulating multiple frames of data, and performing Frame FFT in a sliding window format.

2. The method in this embodiment proposes a process of using Frame FFT and CNN for detection and classification, without the need for conventional signal processing such as CFAR and DoA to obtain point clouds for processing.

3. The method in this embodiment provides a detailed introduction to the pioneering construction of CNN input features, with notable aspects and potential variations including:

① When calculating P(c,r,v), the $\log_2$ operation can be skipped or replaced with $\log_{10}$ or ln operations, etc.

② Calculating P(c,r,v) may be implemented in MCU after complex data is transferred to Mem of MCU via DMA. Or, it may be implemented by using a hardware engine in BB and then directly transferred to Mem of MCU via DMA. Or, a portion of the calculation may be implemented in BB, and the remaining calculations are performed in the MCU after transferred to Mem of MCU via DMA. For example, modulo square operation and $\log_2$ operation can be implemented in BB, and subtraction, division, and saturation truncation can be implemented in MCU.

③ P(c,r,v) can be represented without quantization, using double-precision floating-point or single-precision floating-point, or it may be quantized in the form of int32, int16, int8, or uint32, uint16, uint8.

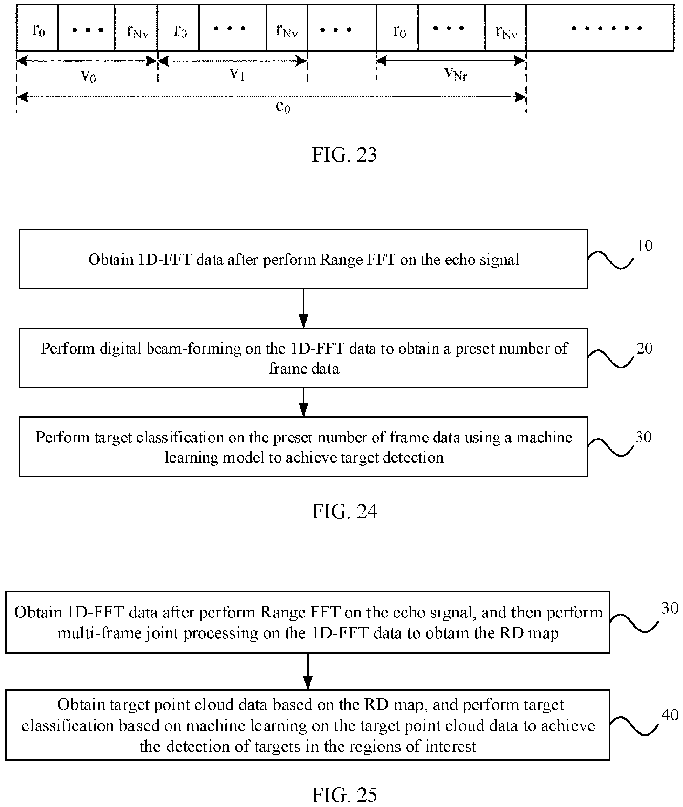

④ The arrangement of the aforementioned data can be continuous along the r dimension, followed by the v dimension and c dimension (as shown in FIG. 23); It may also be v-c-r or c-v-r.

⑤ In the deep learning model, one can either select virtual channels as the model's channels or flatten the virtual channel dimension and adopt a single-channel deep learning model input. For instance, the input of the deep learning model is $1 \times 64 \times 320$, which contains 64 Doppler bins, where 20 range bins each of 16 channels are flattened into 320.

⑥ Only some channels can be selected to avoid the impact of channels with large noise or poor RF simulation characteristics on the processing effect. For example, 13 channels out of 4 transmitting, 4 receiving, and 16 virtual channels can be used to construct a $13 \times 64 \times 20$ CNN input feature data for the determination of empty vehicle, child, and adult.

⑦ The data after Frame FFT can be extracted to save memory and reduce computation, or it may remain unextracted to achieve optimal performance. If truncation is required, it can be performed at any time after 1D-FFT or 2D-FFT, or during the calculation of P, or a combination of these.

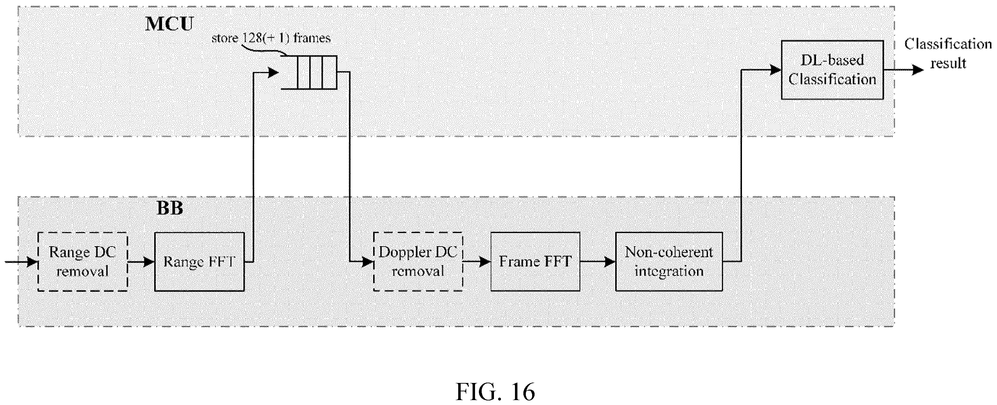

As shown in FIG. 16, the method for target detection in the embodiments of the present application can also adopt the processing flow shown in FIG. 16, that is, the data after Frame FFT is non-coherently integrated by channel to obtain an array, and after performing similar operations to the aforementioned steps of extracting partial Doppler bins and range bins, the array is used as input feature data and fed into a deep learning model for processing to obtain classification results; the number of input channels for the deep learning model is correspondingly selected as 1.

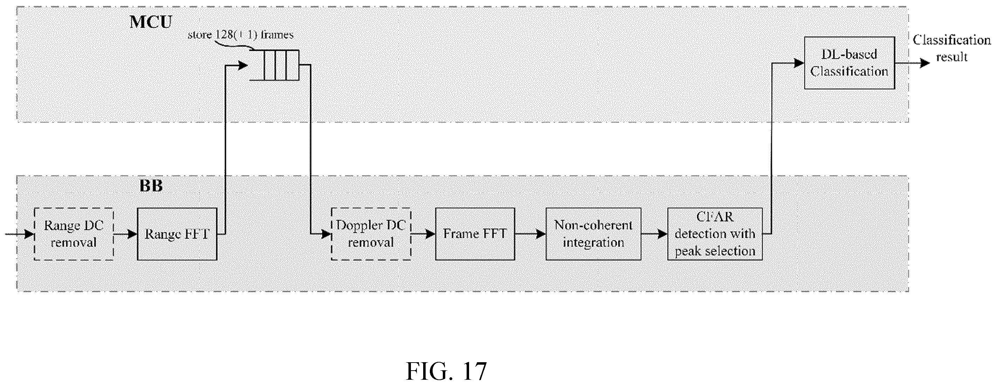

As shown in FIG. 17, the method for target detection in the embodiments of the present application can also adopt the processing flow shown in FIG. 17. The two-dimensional data obtained by non-coherent integration of data after Frame FFT by channel is further processed by selecting only the energy of points that exceed a set threshold using CFAR. The input feature data is obtained by performing similar operations of extracting partial Doppler bins and range bins. The range bins and Doppler bins that do not exceed the threshold are filled in. Subsequently, the input feature data is fed into a deep learning model for processing to obtain classification results; the number of input channels for the deep learning model is correspondingly selected as 1.

It should be noted that a combination of the two embodiments shown in FIG. 16 and FIG. 17 can be adopted. That is, CFAR is performed on the data after Frame FFT by channel, only the energy of points that exceed a set threshold is selected for each channel, and the input feature data is obtained by performing similar operations of extracting partial Doppler bins and range bins. The range bins and Doppler bins that do not exceed the threshold are filled in. Subsequently, the data from all channels is rearranged in a similar manner to the aforementioned rearrangement of $P(c,r,v)$ as input feature data, and is fed into the deep learning model for processing to obtain classification results; the number of input channels for the deep learning model should be correspondingly selected as the number of virtual channels used.

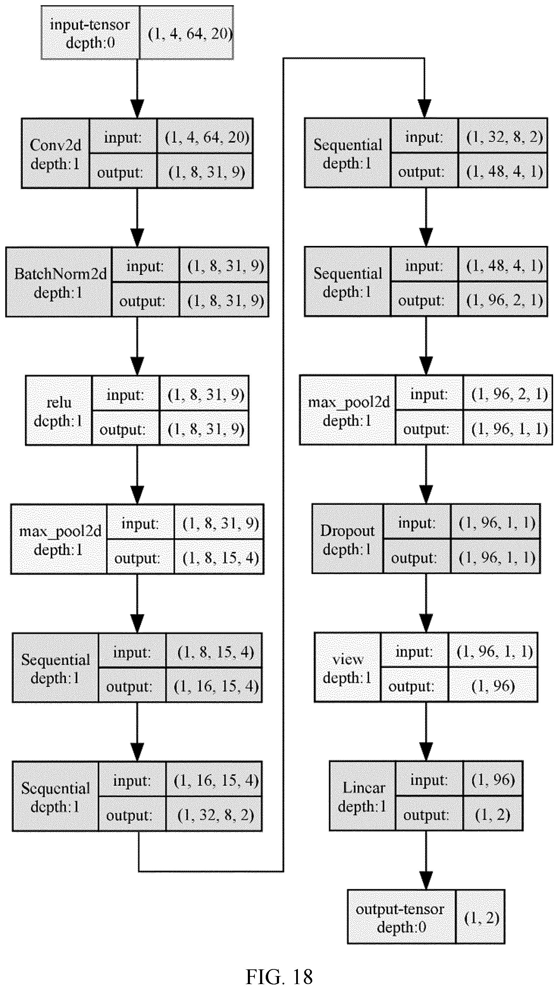

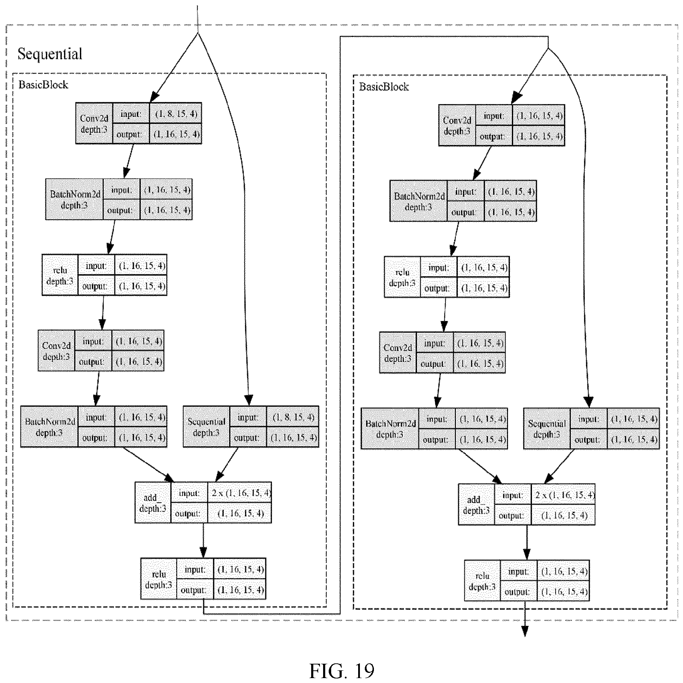

The deep learning model in the embodiments of the present application may choose other CNNs or Transformers, as long as they are compatible with its input. As shown in FIG. 18 and FIG. 19, the CNN model modified based on ResNet18 and the expansion of the Sequential module within it can be utilized. The output here can also be categorized into two types: empty vehicle and non-empty vehicle.

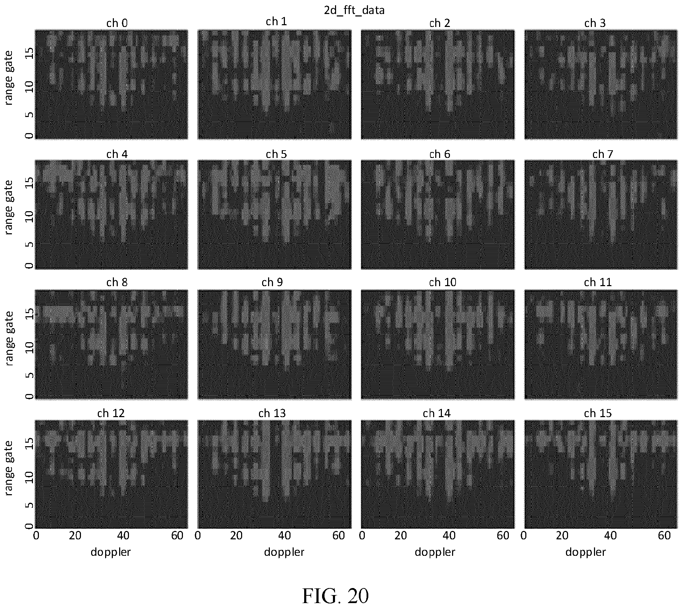

The two images in FIG. 20 respectively show an example of CNN input feature maps corresponding to adults and children. The left image shows the input features of an adult, while the right image shows the input features of a child. Each sub-image corresponds to the data of each channel. The horizontal axis represents Doppler bins, and the vertical axis represents range bins. In this example, 20 range bins and 64 Doppler bins are extracted.

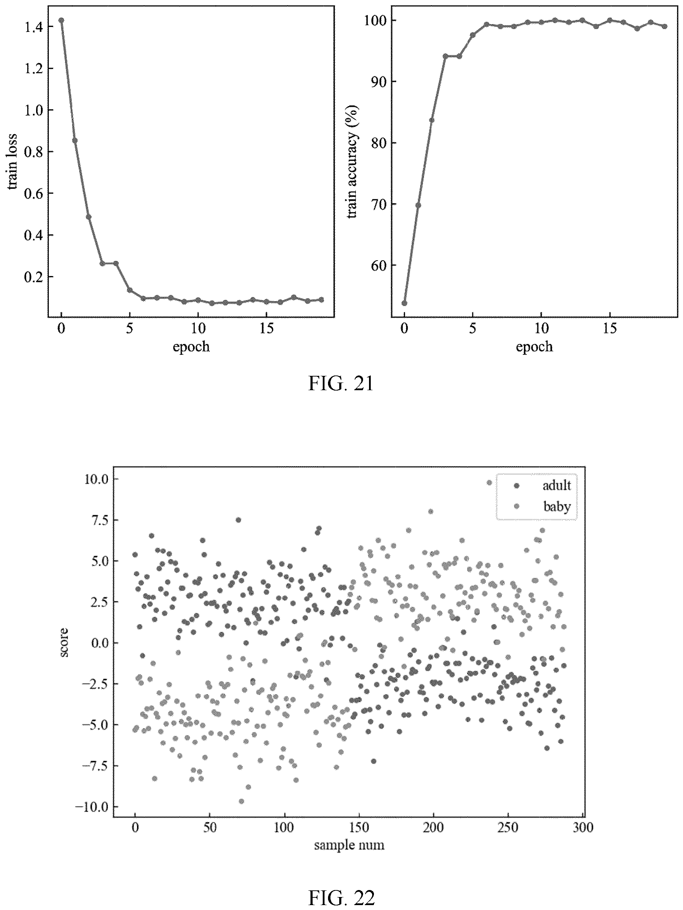

FIG. 21 illustrates the variations in model loss and classification accuracy as the number of training epochs increases. It can be seen that the model converges after approximately 7 epochs and achieves an accuracy of 98%.

FIG. 22 displays the confidence levels achieved during testing on both adult and child samples. The horizontal axis represents the sample serial number, and the vertical axis represents the confidence level (i.e., score). In the experiment, the first 150 samples are of adult inside the car, and the last 150 samples are of child inside the car. For each sample, a potential deep learning model calculates the confidence levels for both adults and children, resulting in two points, blue and orange, for each sample. When the confidence level of an adult is higher than that of a child, it is determined that the person inside the vehicle is an adult. Conversely, when the confidence level of a child is higher than that of an adult, it is determined that the person inside the vehicle is a child. As can be seen from the figure, the trained CNN model can correctly determine whether the person inside the car is an adult or a child.

In some embodiments, the method for target detection, as shown in FIG. 24, includes the following steps.

In step 10, after performing Range FFT on the echo signal, 1D-FFT data is obtained.

In step 20, digital beam-forming is performed on the 1D-FFT data to obtain a preset number of frame data.

In step 30, target classification processing is performed on the preset number of frame data using a machine learning model to achieve target detection.

The detection of targets in the regions of interest mentioned above includes at least one of the following operations: determination, localization, identification.

By performing beam-forming on a predetermined region directly after Range FFT, and subsequently utilizing multi-frame data after beam-forming for target classification processing using a machine learning model, effective detection of whether there is a person inside the vehicle and accurate determination of whether it is an adult or a child can be achieved. Compared to conventional point cloud information based on signal processing, the method in this embodiment has lower requirements for processing units (such as BB units), utilizes data with higher dimensionality and richer information, and can achieve more accurate in-cabin target detection and identification, enabling applications such as CPD and SBR.

In an exemplary embodiment, the machine learning model may be a complex machine learning model, such as a complex-valued neural network model.

It should be noted that the main difference between the embodiment shown in FIG. 24 and the aforementioned embodiments lies in the following. The model used in the embodiment shown in FIG. 24 is a machine learning model, while the model used in the aforementioned embodiment is a deep learning model. To accommodate the input of the complex machine learning model, in some embodiments, this can be achieved by transforming the feature vector. The conversion method involves converting power and phase into real and imaginary parts, that is:

$$z_{real}(r, v, b) = Re[P_{norm}(r, v, b) \cdot exp(1j \cdot \phi(r, v, b))];$$

$$z_{img}(r, v, b) = Im[P_{norm}(r, v, b) \cdot exp(1j \cdot \phi(r, v, b))];$$

$$z(r, v, b) = z_{real}(r, v, b) + 1j \cdot z_{img}(r, v, b);$$

In the formula, $z_{real}$ and $z_{img}$ represent the normalized real part and imaginary part, respectively. $\phi(r,v,b)$ represents the phase of beam b at range r and chirp v, and z(r, v, b) represents the normalized complex signal. In addition, in some embodiments, z(r, v, b) may also be represented using double-precision floating point or single-precision floating point, or quantized in the form of int32, int16, int8, or uint32, uint16, uint8, or through other quantization processes.

Moreover, different loss functions can be used based on different models. For example, a complex-valued neural network model can remove the absolute value (abs) layer in the last layer of the complex-valued CNN. Under this case, the output of the complex-valued CNN is a complex-valued output. Under this case, the following loss function can be used:

$$Loss = CE(Re(y), t)/2 + CE(Im(y), t)/2$$

$$CE(y, t) = -\sum_{i}^{c} t_i \log(f(y_i)\}$$

$$f(y_i) = \frac{1}{1 + e^{-y_i}}$$

where y represents the forward computation output of a complex-valued CNN for a certain sample, which is a vector with a length equal to the number of classifications, and $y_i$ represents the i scalar in y; t represents the one-hot encoded label of the sample and also is a vector with a length equal to the number of classifications, and $t_i$ represents the i scalar in t. Other hyperparameters, such as learning rate and weight decay, may have alternative values.

The embodiment shown in FIG. 24 is basically the same as the other features or implementation methods of the aforementioned embodiments, and further details are omitted here for brevity.

Of course, in the aforementioned embodiments, the corresponding digital signal processing processes are replaced through the use of models, such as replacing angle estimation, CFAR, and other processes. In some embodiments, the model can also be utilized to further process the targets obtained from digital signal processing.

Based on this, in some embodiments, as shown in FIG. 25, the method for target detection includes the following steps.

In step 30, after performing Range FFT on the echo signal, 1D-FFT data is obtained. This 1D-FFT data is then subjected to multi-frame joint processing to obtain the RD map.

In step 40, target point cloud data is obtained based on the RD map, and target classification based on machine learning is performed on the target point cloud data to achieve the detection of targets in the regions of interest.

The detection of targets in the regions of interest mentioned above includes at least one of the following operations: determination, localization, identification.

The method for target detection and its related device provided in this embodiment can achieve target detection solutions in enclosed spaces such as cabins, indoor regions, and industrial buildings through multi-frame joint processing technology, namely through inter-frame integration. This can effectively improve detection rates, reduce the false alarm rate, and significantly enhance the accuracy of angle estimation, thereby enabling precise detection of special or weak targets such as infants in cabins, and realizing applications such as CPD and SBR. Moreover, by performing target classification based on machine learning on point cloud data, more precise region determination and more accurate identification of targets within the region can be achieved. For example, it can improve the accuracy of determining the presence and location of persons in enclosed environments such as cabins.

In the exemplary embodiment, the aforementioned step 30 includes: obtaining 1D-FFT data after performing Range FFT on the echo signal in the chirp domain; performing frame data integration on the 1D-FFT data until the integration reaches a preset data amount, and then performing Frame FFT to obtain the RD map. For example, a sliding window approach may be adopted to read 1D-FFT data of a preset number of frames each time for Frame FFT. That is, precise detection of targets within the cabin can be achieved based on multi-frame joint processing technology. The multi-frame joint processing scheme may be, after obtaining a Range-Doppler map through sliding window FFT on multi-frame data, or after using finite impulse response (FIR) or other complex time-frequency transformation processing, performing CFAR, DOA, and other processing operations on the regions of interest, and combining the set region determination logic and region parameters to achieve the detection and localization of living targets such as adults, children, pets, or other non-living targets. CFAR may be NR-CFAR in Doppler dimension, RD-CFAR, Doppler-azimuth-pitch (DAE) -CFAR, etc. After CFAR and DoA, post-processing techniques such as clustering, false alarm suppression, and multiple processing point cloud association may be applied. The region parameters may be determined by adopting at least one or a combination of at least two of clustering the point cloud detected after multi-frame processing of a sliding window, and detecting and removing outliers from the point cloud detected after multi-frame processing of a sliding window.

In the exemplary embodiment, obtaining target point cloud data in the aforementioned step 40 includes: performing non-coherent integration on the RD map of each channel, performing noise-estimation-based CFAR based on the non-coherent integration results to obtain candidate target detection points, estimating the azimuth mid-angle and elevation for the candidate target detection points, and obtain the target point cloud data based on the azimuth mid-angle and elevation. Performing non-coherent integration on the RD map of each channel can effectively improve the signal-to-noise ratio of human targets to static strong clutters.

In some embodiments, CFAR includes: performing non-coherent integration on the RD map of each channel, estimating the noise floor of each range bin after non-coherent integration, obtaining a noise floor estimation value for each range bin, and performing non-coherent CFAR with the noise floor estimation value, where when estimating the noise floor of each range bin after non-coherent integration, the noise floor of each range bin is corrected with a global noise floor.

In some embodiments, the correction method includes the following. The noise floor of each range bin is corrected using the following method: $n_i' = min(n_i, \alpha * n_g)$, where $n_i$ represents the original noise floor estimation value of the $i$ range bin, $n_g$ represents the average of noise floor estimation values of multiple range bins, $n_i'$ represents a corrected noise floor estimation value of the $i$ range bin, and $\alpha > 1$. Correcting the noise floor can prevent the target from being undetectable due to excessively high noise levels.

In the exemplary embodiment, in step 40, performing target classification based on machine learning on the target point cloud data to achieve the detection (i.e., determination) of targets in the regions of interest includes: inputting the target point cloud data into a pre-trained first machine learning classifier to obtain a first detection result indicating whether the candidate target detection point is a valid candidate target detection point, where the target point cloud data includes coordinate data. The coordinate data referred to refers to the coordinates of a Cartesian coordinate system, including x-coordinate, y-coordinate, and z-coordinate. In some embodiments, the data input to the first machine learning classifier further includes one or more of the following: range data, signal-to-noise ratio, amplitude, azimuth mid-angle, and elevation.

In the exemplary embodiment, in step 40, performing target classification based on machine learning on the target point cloud data to achieve the detection (i.e., localization and identification) of targets in the regions of interest includes: processing the target point cloud data, extracting regional information of the candidate target detection points, and inputting the regional information into a pre-trained second machine learning classifier to obtain a second detection result indicating whether there is a target in the preset region. In some embodiments, the regional information of the candidate target detection points includes one or more of the following types of information: the number of valid candidate target detection points in each preset region, the proportion of valid candidate target detection points in each preset region to the total valid candidate target detection points, and the mean and variance of the distance, azimuth mid-angle, elevation, and CFAR signal-to-noise ratio of all valid candidate target detection points in each preset region.

Combining machine learning classifiers for classification and/or identification can achieve a more refined regional division than the preset logic can achieve, enabling accurate classification of the corresponding positions in the radar-processed point clouds.

The first machine learning classifier or the second machine learning classifier may be any one or more of the following classifiers: support vector machine, random forest, decision tree, Gaussian Mixture Model, KNN, hidden Markov, and multilayer perceptron.

When applied to enclosed or relatively enclosed spatial regions, it is possible to achieve the definition and detection of different regions of interest (divided regions) by pre-dividing the spatial regions. For instance, when detecting targets within the vehicle's interior, the radar-monitored region can be divided into seating zones and aisle zones. Subsequently, corresponding parameter types and thresholds can be preset for different types of zones, and combined with corresponding processing steps to achieve precise detection of targets of interest in specific regions.

In some embodiments, for household automobiles, the interior space can generally be simply divided into head space, rear space, and trunk space. If the rear space is the key monitoring region, it can be further divided into seat regions and aisle regions. The seat regions can also be divided into corresponding number of seat region units based on the seats. Similarly, the aisle regions can also be divided into corresponding number of aisle region units based on the aforementioned seat region units. For example, for a five-seater household sedan, the three seats in the rear space can be divided into three seat region units and three corresponding aisle region units. For different types of regions (or zones or zone units), corresponding parameter types and thresholds can be preset, and adaptive signal data processing methods and steps are adopted, in order to achieve accurate detection of the target of interest (specific target) in specific regions such as zones or zone units. Adjacent zone units may have partially overlapping regions, or may be adjacent or separated by a gap of a preset width.

Based on the technical idea of Frame FFT, the technical solution of the present disclosure is described in detail with reference to the accompanying drawings. Specifically, after performing a fast time domain FFT on the chirp in the echo signal, at least two frames of fast time domain FFT data are integrated. Then, Frame FFT is performed on the data of at least two frames to obtain a Range-Doppler (RD) map. Based on this RD map, target distance and/or speed estimation operations are performed.

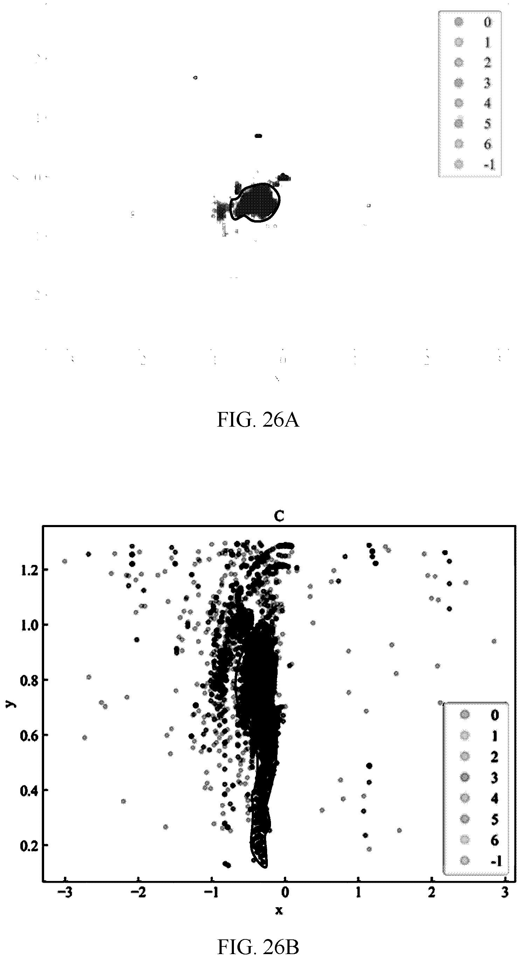

As shown in FIG. 26A, after performing operations such as ADC (Analog-to-Digital Conversion) and sampling on the echo signal, the following steps are carried out in sequence: Range DC removal, Range FFT (also known as 1D-FFT or fast time domain FFT), multi-frame integration (e.g., storing 128 frames of data), Doppler DC removal, Frame FFT, Non-coherent integration, and then CFAR detection based on the noise obtained from noise estimation (such as using a noise variance estimator). Finally, angle detection and target classification are performed to obtain distance, speed, and/or angle information of the target. For instance, azimuth and elevation estimations can be conducted based on CFAR results, which can be specifically achieved through technologies such as DBF and DoA.

After estimating the azimuth/elevation, a machine learning model can be integrated to process the output target point cloud data, enabling precise target detection in the regions of interest. Illustratively, for the single-shot target point cloud data obtained after azimuth/elevation estimation, ML (Machine Learning, such as SVM or RF algorithms) can be combined with false alarm suppression techniques to suppress non-ideal data such as noise, static clutters, or false alarms caused by target multipath. Specifically, for target point cloud data such as elevation DBF & DoA outputs, one or more of the following operations can be performed: ML-based false-alarm suppression, clustering, and ML-based classification, where clustering can be implemented using algorithms such as agglomerative clustering or DBSCAN. In the exemplary embodiment, the point cloud data after clustering can also be input into a machine learning model (such as SVM or RF) that has been trained to determine whether there is a person present in the current processing. If there is a person, it can further determine his location and achieve operations such as physical target identification and determination such as adults, children, and infants.

The embodiment shown in FIG. 26A can effectively reduce the impact of non-ideal factors such as noise, static clutters, and target multipath, effectively alleviate the difficulty in selecting regional parameters and the difficulty in designing complex region determination logic. This, in turn, enables more effective utilization of point cloud information, especially for applications in complex scenes, achieving better performance in target detection and identification.

In some alternative embodiments, for electromagnetic wave sensors equipped with BB and MCU, frame data integration (store 128 frames) and target classification (classification, for example, classification based on Region HIST) can be performed in the MCU module based on the flowchart of target detection shown in FIG. 26A, and Range DC removal and Doppler DC removal can be performed in the BB module or MCU module. In the flow shown in FIG. 26A, DC removal is performed on the downlink ADC data in the BB module by way of example.

As shown in FIG. 26A, after performing 1D-FFT or obtaining range dimension information in the BB module, the 1D-FFT data can be cached in the MCU module. When the cached data reaches a preset amount of data (such as 128, 56, or 32 frames), the data cached to the preset number of frames can be subjected to DC removal and frame-level FFT in the frame dimension to obtain an RD map.

When the system includes multiple channels, as shown in FIG. 26A, non-coherent integration can be performed on the multi-channel RD map, and a noise variance estimator (NVE) module can be utilized to estimate the noise floor of each range bin in the integrated data. For instance, noise floor estimation can be conducted based on a preset formula, and subsequent noise reference (NR) - CFAR can be performed based on the noise floor estimation value. The preset formula mentioned above can be: $n_i=\min(n_i, \alpha*n_g)$, where $n_i$ represents the noise floor estimation for the ith range bin, $n_g$ represents the noise floor estimation for the last range bin of interest, and $\alpha$ is a coefficient greater than 1 which can be set and updated based on requirements, engineering data, experience, or other factors.

Regarding angle estimation, as shown in FIG. 26A, azimuth dimension DBF and DoA, as well as pitch dimension DBF and DoA, can be performed separately for CFAR detection point data to obtain azimuth and elevation estimation data for each CFAR detection point.

FIG. 26B is a flowchart illustrating another implementation of target detection based on frame-level FFT in an embodiment of the present application. The difference from FIG. 2A lies in the slight variation in subsequent classification based on machine learning. For the target point cloud data output by elevation DBF & DoA, one or more of the following operations are performed: ML-based points classification, Region feature extraction, and ML-based region classification, where ML-based points classification is used to determine the targets in the region of interest, that is, to classify the target point cloud data and obtain effective target detection points (i.e., the aforementioned valid candidate target detection points); Region feature extraction can aid classification, for instance, clustering can enhance classification performance, thereby improving classification accuracy and performance, and ML-based region classification is used to locate and identify targets within the region of interest, that is, to determine whether there are targets within a preset region.

In the aforementioned embodiment, frame-level FFT is utilized to replace conventional chirp-level Doppler FFT to determine the speed of the target, achieving precise detection of the target of interest. Furthermore, sliding window FFT across multiple frames can be utilized to further enhance the update frequency of the results, thereby improving the real-time performance of the system. Moreover, the amount of data processed can be reduced by processing only the range bins and/or Doppler bins of interest. Additionally, during background noise estimation, taking the minimum value of the estimation of the current range bin and that of the last range bin of interest yields a background noise that is more suitable for application scenarios which are relatively sealed such as vehicle interiors. Regarding regional logical determination, counting the target points detected in each frame according to the preset regional design and determining the counting results according to the preset rules can accurately determine whether there are targets within each preset region.

It should be noted that, similar to the aforementioned embodiments, when performing target detection, there is no limitation on the implementation or substitution of the corresponding processing. For example, FFT may be implemented as windowed FFT, or SVA combined with FFT can be used, or multi-frame sliding window FFT can replace other time-frequency transformation processes, such as short-time Fourier transform and fractional Fourier transform. Effective detection of the target of interest can also be achieved, and further details are omitted here for brevity.

In some embodiments, after Frame FFT, 2D-DBF and ML-based classification operations can be directly performed. That is, after Frame FFT, CFAR is not performed, but 2D-DBF is performed on the azimuth and elevation for each region of interest (or unit zone) to obtain RD maps of a corresponding number to the regions of interest; Subsequently, the aforementioned RD maps are input into the constructed machine learning (ML) model for target determination. In some alternative embodiments, if instead methods such as FIR or short-time Fourier transform (STFT) instead of Frame FFT are used for processing, the aforementioned RD map corresponding to FIR is a one-dimensional map output, and the aforementioned RD map corresponding to STFT time-frequency transform is a three-dimensional map.

The embodiments of the present application can be mutually referenced and compatible without conflict, and the sequence of various functional modules and whether to set up various functional modules can also be adjusted according to needs. For a system with BB module and MCU module, when the system performs target detection by emitting electromagnetic waves and receiving corresponding echo signals, the various steps in the method for target detection in the embodiments of the present application can be configured to run in the BB module and/or MCU module based on actual needs and considerations of data processing capabilities and timeliness of system operation. The relevant examples in the diagram can serve as references for some of these options.

According to the method described in the embodiments of the present application, multi-frame joint processing technology is used, and coherent integration is performed separately on the frequency corresponding to human breathing in the Doppler domain and on multiple antenna channels at preset azimuth in the spatial domain, effectively enhancing the signal-to-noise ratio of human targets to static strong clutters. Combining machine learning models for clustering and classification of radar point clouds can achieve a more refined region determination than the preset logic can achieve, enabling accurate classification of the seats corresponding to the radar-processed point clouds. By improving the signal-to-noise ratio, unsupervised clustering self-labeling, and refined machine learning classification, it is possible to make more accurate determination on the presence and location of human targets in enclosed environments such as cabins. Compared to rule-based region determination, the model construction and processing flow in the method disclosed herein reduces the design of rules, eases the difficulty of parameter adjustment, and enhances the convenience and applicability of the method.

Based on the aforementioned scheme, after testing with actual collected data, it can effectively achieve a high detection rate, and extremely low missed detection and false alarm rates, specifically for the application scenario with top-mounted radar. For in-cabin target detection, it can achieve a detection rate of over 99%, a missed detection rate of less than 0.5%, and a false alarm rate of less than 1%.

The embodiments of the present application further provide a method for target detection, which is applied to target detection in specific target regions (such as enclosed or semi-enclosed regions). The method includes: inputting the target point cloud data into a pre-trained first machine learning classifier to obtain valid candidate target detection points, extracting the region information of all valid candidate target detection points, and inputting them into a pre-trained second machine learning classifier to obtain target detection results. Specific steps may refer to the descriptions in the preceding or following embodiments, and are not repeated here.

It should be noted that the process shown in FIG. 26B is implemented in a similar manner to the process of the embodiment shown in FIG. 1 and other figures mentioned earlier. Therefore, the same parts are not repeated here. The following primarily explains different parts.

In the process shown in FIG. 26B, when estimating the azimuth mid-angle of candidate target detection points, the following operations are performed for each candidate target detection point $T_i$: extracting 2D-FFT data corresponding to this detection point, selecting the azimuth-dimension antenna, performing azimuth-dimension DBF based on the azimuth-dimension steering vector to obtain the azimuth-dimension DBF map, where the DBF map displays the variation of signal power or intensity in different directions with frequency, and estimating the azimuth mid-angle $\theta_{i,j}$ based on the azimuth-dimension DBF map. The relationship between the azimuth mid-angle and the azimuth is: Azimuth mid-angle = sin(azimuth) cos(elevation). When estimating the elevation of candidate target detection points, for each candidate target point $T_{i,j}$, its pitch direction steering vector sv(i, j) is generated based on its azimuth mid-angle $\theta_{i,j}$ and array arrangement. Pitch-dimension DBF is performed on each candidate target point $T_{i,j}$ to obtain its pitch-dimension DBF map. The elevation $\varphi_{i,j,k}$ is estimated based on the pitch-dimension DBF map. where i represents the serial number of a CFAR point (such as a range bin), j represents the serial number of multiple candidate target points of a certain CFAR point in different azimuths, and k represents the serial number of multiple candidate target points of a certain CFAR point in different elevations.

Furthermore, in some exemplary embodiments, when estimating the azimuth mid-angle and elevation, two-dimension DBF for azimuth and elevation can be directly performed to estimate the azimuth mid-angle and elevation, or other super-resolution algorithms such as the minimum variance unbiased estimation (Capon) algorithm, multiple signal classification (MUSIC) algorithm, etc. can be used to estimate the azimuth mid-angle and elevation. Therefore, during target information extraction, information can be extracted from all candidate target points $T_{i,j,k}$ that meet the detection conditions (such as exceeding the CFAR threshold), including but not limited to the range bin index, Doppler bin index, distance $r_{i,j,k}$, Doppler frequency $f_{i,j,k}$, azimuth mid-angle $\theta_{i,j,k}$, elevation $\varphi_{i,j,k}$, CFAR SNR $snr_{i,j,k}$, and amplitude $amp_{i,j,k,c}$ of each channel, where c is the channel index. Then, coordinate system transformation is performed: performing coordinate system transformation on the distance $r_{i,j,k}$, azimuth mid-angle $\theta_{i,j,k}$, and elevation $\varphi_{i,j,k}$ of each candidate target point $T_{i,j,k}$, to obtain its position in the Cartesian coordinate system: x, y, and z, with their transformed data format as follows:

$$x_{i,j,k} = r_{i,j,k} \cdot \sin\ (\theta_{i,j,k})$$

$$z_{i,j,k} = r_{i,j,k} \cdot \sin\ (\varphi_{i,j,k})$$

$$y_{i,j,k} = r_{i,j,k} \cdot \sqrt[2]{1 - x_{i,j,k}^2 - z_{i,j,k}^2}$$

Then, the pre-trained first machine learning classifier is utilized to classify the region to which the candidate target belongs. Specifically, multiple attributes of the candidate target point $T_{i,j,k}$ are taken as inputs, and the first machine learning classifier is employed to classify the region to which each candidate target point belongs, in order to determine whether the candidate target point $T_{i,j,k}$ is a valid target point or an invalid interference point in a certain region. A possible input instance for the first machine learning classifier is: $r_{i,j,k}$, $x_{i,j,k}$, $z_{i,j,k}$, $y_{i,j,k}$, $snr_{i,j,k}$, $amp_{i,j,k,c}$. The machine learning classifier may be, for example, a support vector machine (SVM) or random forest (RF).

It should be noted that the first machine learning classifier may have multiple forms, or even be a fusion of multiple forms. For example, it may be a fusion of support vector machine, decision tree, and Gaussian Mixture Model. A weight is set for the output results of each classifier to obtain the weighted average of all classifiers. The weighted average result is then used for another determination to obtain the final decision result.

The input of the first machine learning classifier mentioned above is merely an example. In other embodiments, the attributes of $T_{i,j,k}$ for the selected candidate target points may be the whole or part of "$r_{i,j,k}$, $x_{i,j,k}$, $z_{i,j,k}$, $y_{i,j,k}$, $f_{i,j,k}$, $snr_{i,j,k}$, $amp_{i,j,k,c}$". For instance, it may only include coordinate data (the aforementioned x, y, z values), or it may also include one or more of distance data (the aforementioned r), Doppler frequency (the aforementioned f), signal-to-noise ratio (the aforementioned snr), and amplitude value (the aforementioned amp), in addition to coordinate data. Alternatively, those skilled in the art can increase inputs of the first machine learning classifier based on the disclosed concept. For example, coordinate data may be replaced with azimuth mid-angle and elevation, or the azimuth mid-angle and elevation data may be inputted into the first machine learning classifier together.

Then, the pre-trained second machine learning classifier is utilized to classify each region, that is, to extract regional features. counting the number of valid target points in each region and the proportion, denoted as $w_l$, of valid target points to the total valid target points, calculating the mean and variance of the distance, azimuth mid-angle, elevation, and SNR for all valid target points in each region, which are denoted as the mean of distance $\overline{r_l}$, variance of distance $\sigma_{r,l}$, mean of azimuth mid-angle $\overline{\theta_l}$, variance of azimuth mid-angle $\sigma_{\theta,l}$, mean of elevation $\overline{\sigma_l}$, variance of elevation $\sigma_{\varphi,l}$, mean of SNR $\overline{snr_l}$, and variance of SNR $\sigma_{snr,l}$, where 1 represents the index of the region; feeding the aforementioned regional features, including $w_l$, $\overline{r_l}$, $\sigma_{r,l}$, $\overline{\theta_l}$, $\sigma_{\theta,l}$, $\overline{\varphi_l}$, $\sigma_{\varphi,l}$, $\overline{snr_l}$, and $\sigma_{snr,l}$, into the second machine learning classifier for classification, and determining whether there is a person present in each region.

Illustratively, when counting the number of valid target points in each region and the proportion $w_l$ of valid target points to the total valid target points, valid points that are determined to belong to multiple regions can be counted repeatedly (suitable for multi-label classification, such as scenarios where there is a person present in both region A and region B), or they can be counted non-repeatedly (suitable for single-label classification). The present disclosure does not impose any restrictions on this.

The second machine learning classifier may have multiple forms, or even be a fusion of multiple forms. For example, it may be a fusion of support vector machine, decision tree, and Gaussian Mixture Model. A weight is set for the output results of each classifier to obtain the weighted average of all classifiers. The weighted average result is then used for another determination to obtain the final decision result.

The input of the second machine learning classifier mentioned above is merely an example. In other embodiments, the attributes of $T_{(i,j,k)}$ for the selected candidate target points may be part of "$w_l$, $\overline{r_l}$, $\sigma_{r,l}$, $\overline{\theta_l}$, $\sigma_{\theta,l}$, $\overline{\varphi_l}$, $\sigma_{\varphi,l}$, $\overline{snr_l}$ and $\sigma_{snr,l}$". Alternatively, those skilled in the art can increase inputs of the second machine learning classifier based on the disclosed concept.

The first machine learning classifier for determining valid points mentioned above may be any of the following classifiers: support vector machine, random forest, decision tree, Gaussian Mixture Model, K-nearest neighbor (KNN), hidden Markov, and multilayer perceptron. The training steps of this classifier model include:

1. generating valid point labels, where one possible process therefor is:
pre-dividing the region, as shown in FIG. 6, where the horizontal axis represents the X direction (vehicle width direction) and the Z direction (rear-to-front direction of the vehicle). The space is divided into six regions, consisting of three seats in the rear row and three aisles in front of the three seats. These regions may overlap with each other or have no overlap. Some regions inside the vehicle may belong to multiple preset regions simultaneously, or they may not belong to any region. In other embodiments, region subdivision can be performed in conjunction with human targets during region division. For instance, the rear seats A, B, and C may be divided into: adult seat A, adult seat B, adult seat C, child seat A, child seat B, and child seat C. In this way, when the application scenario requires determining whether there are persons on the rear seats A, B, and C, and whether it is an adult or a child, the results can be obtained directly. It only requires to add the corresponding classification in the valid point determination and region determination, and then proceed with training.

For data from various scenarios, including scenarios where someone is on seat A, someone is on seat B, someone is on seat C, or no one is present, the aforementioned steps 1 to 10 are applied to obtain the attributes of all candidate target points $T_{i,j,k}$ for each scenario. For example, the following options can be selected: all or part of $r_{i,j,k}$, $x_{i,j,k}$, $z_{i,j,k}$, $y_{i,j,k}$, $f_{i,j,k}$, $snr_{i,j,k}$, $amp_{i,j,k,c}$. All regional scenarios, such as the seats A, B, C or aisle regions A, B, C in FIG. 5, are traversed, and the following operations are performed:

1.1 performing clustering analysis on all candidate target point data for this scenario, and removing outliers, where in some embodiments, the density clustering algorithm (DBSCAN) is utilized to perform clustering analysis on these candidate target point data; while in other embodiments, other clustering algorithms may be used to generate valid point labels, or they can be manually annotated.
1.2 choosing a category with a largest number of samples after clustering analysis as the true target of the region, and setting its label to 1; where all other types of candidate points are false targets, and their labels are set to 0. In other embodiments, all non-noise candidate target points from DBSCAN clustering analysis can be selected as real target points, with their labels set to 1, while noise candidate target points from DBSCAN clustering analysis can be selected as invalid target points, with their labels set to 0; or a category with a larger number of samples may be manually selected as the true target of the region, and set its label to 1, while the candidate points of other categories are all false targets, and their labels are set to 0.

For empty vehicles and interference scenarios, all candidate target points are set as invalid target points, with their labels set to 0.
2. training the model based on the generated labels, where the main steps are: traversing various regional scenarios, such as seats A, B, C or aisles A, B, C, and performing the following operations:

2.1 reading the attributes and labels of all candidate target points in the region, denoted as S{Xi} and S{Li} respectively, and reading the attributes and labels of all candidate target points in the empty vehicle and interference scenarios, denoted as S{X0} and S{L0} respectively; where each element in S{Xi} is an N×1 vector, one possible implementation is to use any six scalars from the following attributes of the candidate target point, $r_{i,j,k}$, $x_{i,j,k}$, $z_{i,j,k}$, $y_{i,j,k}$, $f_{i,j,k}$, $snr_{i,j,k}$, $amp_{i,j,k,c}$ (for example, $r_{i,j,k}$, $x_{i,j,k}$, $z_{i,j,k}$, $y_{i,j,k}$, $f_{i,j,k}$, and $snr_{i,j,k}$) for valid point determination, and if there are 16 MIMO virtual channels in total, each element in S{XI} is a 22 x 1 feature vector;
2.2 merging the attributes and labels of these target points to obtain the training input data S{X} = S{Xi} U S{X0} and training labels S{L} = S{Li} U S{L0};
2.3 training the machine learning classifier with the input data S{X} and labels S{L} to obtain a classifier model $M_{v,l}$.

For the application scenario of distinguishing between six regions: rear seats A, B, C, and aisle A, B, C, six machine learning classifier models M_(v,l) can be obtained after performing the above steps, where l=1,2,...,6 respectively corresponds to six regions: the rear seats A, B, C, and the aisles A, B, C, each machine learning classifier model M_(v,l) can determine whether a candidate target point is a valid target point in each of the six regions based on the attributes of the candidate target point, such as the 22 x 1 feature vector composed of $r_{i,j,k}$, $x_{i,j,k}$, $z_{i,j,k}$, $y_{i,j,k}$, $f_{i,j,k}$, $snr_{i,j,k}$, $amp_{i,j,k,c}$.
Illustratively, the first machine learning classifier may be a classifier for multi-classification, or a classifier with fewer than the number of regions for hierarchical multi-classification. For example, to classify six seat regions, classifier 1 can be designed to implement the classification of seats and aisles, and classifier 2 and classifier 3 can be designed to implement the classification of aisles A, B, C and classification of seats A, B, C, respectively.

Illustratively, oversampling and/or undersampling operations can be performed during the training of the first machine learning classifier. The oversampling refers to balancing the quantity differences between different categories in the dataset by increasing the replication of minority category samples or synthesizing new samples. By increasing data in the minority category samples, the distribution of samples among various categories is more balanced, thereby enhancing the model's learning ability for minority category samples. The term "undersampling" refers to balancing an imbalanced dataset by reducing the number of majority category samples, so that the sample sizes between various categories are closer. By removing the majority category samples, the number of samples in each category is approximate, thereby reducing the model's preference for the majority category.

When utilizing the first machine learning classifier for valid point determination, a candidate target point may be classified as belonging to multiple regions. For instance, if the outputs of classifier models $M_{v,1}$ and $M_{v,2}$ are both 1, while the outputs of other classifier models are all 0, then the candidate target point is determined to be a valid target point for both seat A and seat B.

The second machine learning classifier used to determine whether there is a person in each region may also be any of the following classifiers: SVM, RF, decision tree, Gaussian Mixture Model, KNN, hidden Markov, and multilayer perceptron. The training steps of this classifier model include:

traversing various regional scenarios, such as seats A, B, C or aisles A, B, C, and performing the following operations:

1. reading the regional features processed by sliding window per frame for the scene generated according to steps 1-11 mentioned above, such as $w_l$, $\bar{r}_l$, $\sigma_{r,l}$, $\bar{\theta}_l$, $\sigma_{\theta,l}$, $\bar{\varphi}_l$, $\sigma_{\varphi,l}$, $\overline{snr}_l$, $\sigma_{snr,l}$, and using them as positive sample data for input, where each element is a $9 \times 1$ feature vector, and all sample labels are set to 1;

2. reading the regional features processed by sliding window per frame for each of the other scenes generated in steps 1-11 above, and using them as negative sample data for input, and all sample labels are set to 0;

3. merging positive and negative sample data and labels, where if the number of positive samples is less than the number of negative samples during merging, resampling can be performed on the positive samples with a repetition factor $\gamma = N_n/N_p$, where $N_n$ and $N_p$ represent the number of negative and positive samples, respectively;

4. training the second machine learning classifier to obtain a classifier model $M_{c,l}$.

For the application scenario of distinguishing between six regions: rear seats A, B, C, and aisle A, B, C, six machine learning classifier models $M_{c,l}$ can be obtained after performing the above steps, where l=1,2,...,6 respectively corresponds to six regions: the rear seats A, B, C, and the aisles A, B, C, each machine learning classifier model $M_{c,l}$ can determine whether there is a person present in region l. If the regional features of a sliding window processing are inputted, and the output of the second machine learning classifier model $M_{c,l}$ is 0, it is determined that there is no person in the region 1, while if the output of the machine learning classifier model $M_{c,l}$ is 1, it is determined that there is a person in the region 1. It is noted that based on this processing flow, it is possible to make determination for scenarios involving multiple people.

In the exemplary embodiment, the empty vehicle scenario can be output as a separate category.

When utilizing the second machine learning classifier for valid point determination, a candidate target point may be classified as belonging to multiple regions. For instance, if the outputs of classifier models $M_{c,1}$ and $M_{c,2}$ are both 1, while the outputs of other classifier models are all 0, then it is determined that there are persons present on both seat A and seat B in this scenario; and when the outputs of all classifier models $M_{c,l}$, l=1,2,...,6 are 0, it is determined that no person exists in this scenario.

Illustratively, the second machine learning classifier may be a classifier for multi-classification, or a classifier with fewer than the number of regions for hierarchical multi-classification.

Illustratively, oversampling and/or undersampling operations can be performed during the training of the second machine learning classifier. The oversampling refers to balancing the quantity differences between different categories in the dataset by increasing the replication of minority category samples or synthesizing new samples. By increasing data in the minority category samples, the distribution of samples among various categories is more balanced, thereby enhancing the model's learning ability for minority category samples. The term "undersampling" refers to balancing an imbalanced dataset by reducing the number of majority category samples, so that the sample sizes between various categories are closer. By removing the majority category samples, the number of samples in each category is approximate, thereby reducing the model's preference for the majority category.

The method in the embodiments of the present application differs from the slow time processing between chirps in radar signal processing in related technologies. By accumulating multiple frames of data and performing Frame FFT in a sliding window manner, the embodiments of the present application can improve the signal-to-noise ratio of human targets to static strong clutters. The embodiments of the present application utilize machine learning models for regional division, which offers richer information compared to spatial division and regional determination strategies based on preset rules. Furthermore, it can be fully automated without human intervention, significantly reducing the pressure of parameter tuning.

The embodiments of the present application are not only applicable to the detection and localization of human targets in vehicles, but also to other similar application scenarios such as indoor human detection and factory human detection.

The aforementioned operations can be executed in CPU or MCU, or in the baseband unit BB, or partially executed by CPU or MCU and partially executed by BB. For example, 1D-FFT, 2D-FFT, CFAR, DBF, and DOA are executed in BB, while target detection and identification are executed in MCU.

FIG. 26A and FIG. 26B show the results of DBSCAN clustering for all points from multiple experiments conducted on the seat C scenario. The black dots in the figure represent candidate target points identified as noise by DBSCAN, while the dots of other colors represent different classification clusters. According to the above embodiment, the classification cluster with the largest number of samples (as indicated by the black box in the figure) is labeled as the valid points in the seat C region, while other points are labeled as invalid points.

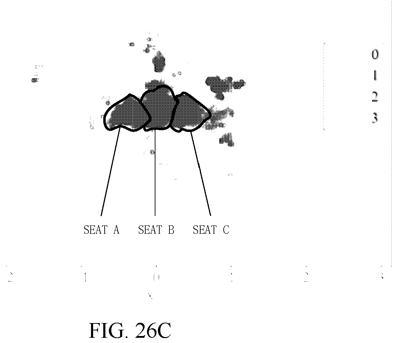

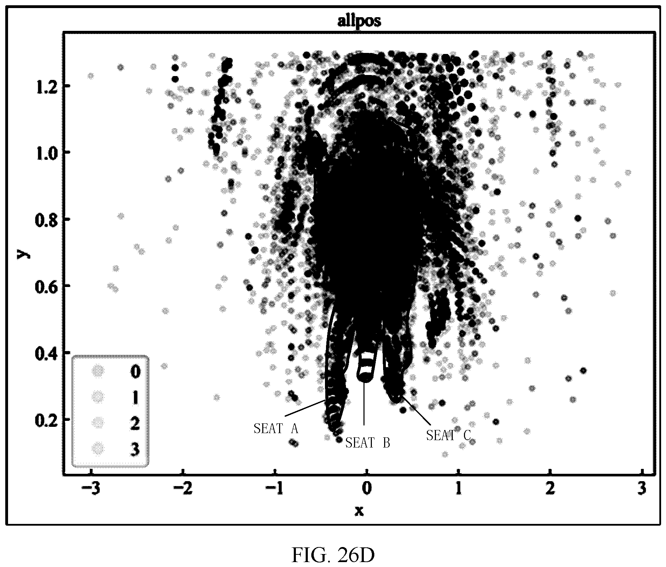

FIG. 26C and FIG. 26D show the results after applying DBSCAN clustering and assigning labels to all points from multiple experiments considering the scenarios of seats A, B, and C. The clusters with the most valid points for seats A, B, and C are indicated by the black boxes in the figure.

Compared to existing technologies, the method in the embodiments of the present application adopts a novel inter-frame integration approach, and performs coherent integration on the frequency corresponding to human breathing, thereby enhancing the signal-to-noise ratio of human targets to static strong clutters. The method adopts clustering method to eliminate abnormal outliers, achieving self-labeling of radar point cloud samples. The method integrates machine learning classifiers such as SVM, random forest, or Gaussian mixture model, to achieve a more refined regional division than the preset logic can achieve, enabling accurate classification of the seats corresponding to the radar-processed point clouds. By improving the signal-to-noise ratio, unsupervised clustering self-labeling, and refined machine learning classification, it is possible to make more accurate determination on the presence and location of human targets in enclosed environments such as cabins. Compared to rule-based region determination, the model construction and processing flow in the method disclosed herein reduces the design of rules, eases the difficulty of parameter adjustment, and enhances the convenience and applicability of the method.

The division of steps in the various methods above is solely for clarity of description. During implementation, these steps may be merged into a single step or some steps may be split into multiple steps, as long as they retain the same logical relationship. All these variations fall within the scope of protection of the present application. Adding insignificant modifications or introducing insignificant designs to the algorithm or process, without altering the core design of the algorithm and process, is within the scope of protection of the present application.

The embodiments of the present application further provide an integrated circuit, including a radio frequency module, an analog signal processing module, and a digital signal processing module connected in sequence; where the radio frequency module is configured to generate a radio frequency transmitting signal and receive an echo signal; the analog signal processing module is configured to perform frequency reduction processing on the echo signal to obtain an intermediate frequency signal; the digital signal processing module is configured to perform analog-to-digital conversion on the intermediate frequency signal to obtain a digital signal; and to process the digital signal based on the method for target detection in the embodiments of the present application to achieve the purpose of target detection. For example, this integrated circuit may be a millimeter-wave radar chip (chip or die). The aforementioned digital signal processing module may include a baseband module and a main control module. Each module may be configured to perform the corresponding steps in the method for target detection described in the aforementioned embodiments.

In some alternative embodiments, the integrated circuit may be of an antenna-in-package (AiP) chip structure, an antenna-on-package (AoP) chip structure, or an antenna-on-chip (AoC) chip structure.

According to other embodiments of the present application, an electromagnetic wave sensor is further proposed. The electromagnetic wave sensor may include an antenna and the aforementioned integrated circuit. The integrated circuit is electrically connected to the antenna and configured for receiving and transmitting electromagnetic wave signals. For example, the electromagnetic wave sensor may include: a carrier, the integrated circuit and antenna as described in any of the above embodiments, where the integrated circuit may be arranged on the carrier; the antenna may be arranged on the carrier, or the antenna and the integrated circuit may be integrated into a single piece and arranged on the carrier (i.e., in this case, the antenna may be the antenna provided in the AiP, AoP, or AoC structure); the integrated circuit is connected to the antenna (i.e., the sensing chip or integrated circuit is not integrated with the antenna, such as conventional SoC) for receiving and transmitting electromagnetic wave signals. Among them, the carrier may be a printed circuit board (PCB), and the corresponding transmission line may be a PCB line.

It should be noted that the electromagnetic waves mentioned in the present application may include both radio waves and light waves. Radio waves include short waves, medium waves, long waves, and microwaves. Microwaves include centimeter waves (i.e., electromagnetic waves ranging from 3GHz to 30GHz, such as those from 3.1GHz to 10.6GHz and those in the 24GHz frequency band) and millimeter waves (i.e., electromagnetic waves ranging from 30GHz to 300GHz, such as those in the 60GHz frequency band and those in the 77GHz frequency band, specifically from 77GHz to 81GHz). Light waves, on the other hand, may include ultraviolet light, visible light, infrared light, and laser light, where the electromagnetic wave frequency band of laser light falls within the range of $(3.846\sim7.895)*10^5Ghz$. That is, laser light falls within certain frequency bands of ultraviolet and visible light.

The embodiments of the present application provide a device, which may include: a device body; and the electromagnetic wave sensor as described above, which is arranged on the device body; where the electromagnetic wave sensor is configured for target detection and/or communication, to provide reference information for operation of the device body.

The embodiments of the present application further provide an electronic device, which can be represented in the form of a general-purpose computing device. The components of the electronic device may include, but are not limited to: at least one processing unit, at least one storage unit, a bus connecting different system components (including storage and processing units), a display unit, etc. The storage unit stores program code, which can be executed by the processing unit, enabling the processing unit to execute the method described in this specification according to various exemplary embodiments of the present application. The storage unit may include readable media in the form of volatile storage units, such as random access memory (RAM) and/or cache memory, and may further include read-only memory (ROM).

The storage unit may also include programs/utilities with a set of (at least one) program modules. Such program modules include but are not limited to: an operating system, one or more applications, other program modules, and program data. Each of these examples, or some combination thereof, may include the implementation of a network environment.

The bus may represent one or more of several types of bus structures, including a storage unit bus or storage unit controller, a peripheral bus, a graphics acceleration port, a processing unit, or a local bus using any of multiple bus structures.

The electronic device may also communicate with one or more external devices (such as keyboards, pointing devices, Bluetooth devices, etc.), as well as with one or more devices that enable users to interact with the electronic device, and/or with any device (such as routers, modems, etc.) that enables the electronic device to communicate with one or more other computing devices. Such communication can be facilitated through input/output (I/O) interfaces. Moreover, the electronic device may also communicate with one or more networks (such as a local area network (LAN), a wide area network (WAN), and/or a public network, such as the Internet) through a network adapter. The network adapter may communicate with other modules of the electronic device through the bus. It should be understood that, although not shown in the figure, other hardware and/or software modules may be used in combination with the electronic device, including but not limited to: microcode, device drivers, redundant processing units, external disk drive arrays, RAID systems, tape drives, and data backup storage systems, etc.

For example, the electronic device in the embodiments of the present application may further include: a device body; and the electromagnetic wave sensor as described in any of the above embodiments, which is arranged on the device body; where the electromagnetic wave sensor is configured to achieve functions such as target detection and/or wireless communication.

Specifically, based on the above-mentioned embodiments, in an alternative embodiment of the present application, the electromagnetic wave sensor can may be arranged outside or inside the device body. In other alternative embodiments of the present application, the electromagnetic wave sensor may also be partially arranged inside and partially arranged outside the device body. The embodiments of the present application do not impose any limitations on this, and the specific implementation can be determined based on the actual situation.

In an alternative embodiment, the aforementioned device body may serve as components and products applied in various fields such as smart cities, smart homes, transportation, smart home devices, consumer electronics, security monitoring, industrial automation, in-cabin detection (such as smart cabins), medical devices, and healthcare. For instance, the device body may serve as intelligent transportation equipment (such as automobiles, bicycles, motorcycles, ships, subways, trains, etc.), security equipment (such as cameras), liquid level/flow rate detection equipment, intelligent wearable devices (such as bracelets, glasses, etc.), smart home devices (such as floor-sweeping robots, door locks, televisions, air conditioners, smart lights, etc.), various communication devices (such as mobile phones, tablet computers, etc.), as well as devices such as road gates, intelligent traffic lights, intelligent signs, traffic cameras, and various industrialized robotic arms (or robots). It may also serve as various instruments that detect vital signs parameters and various devices equipped with such instruments, such as vital sign detection devices in vehicle cabins, indoor personnel monitoring devices, intelligent medical equipment, consumer electronic devices, etc.

The embodiments of the present application further provide a non-transient computer-readable storage medium, on which computer-readable instructions are stored. When the instructions are executed by a processor, they enable the processor to perform the method as described above.

Through the description of the above embodiments, those skilled in the art can readily understand that the embodiments described here can be implemented through software, or through a combination of software and necessary hardware. The technical solution according to the embodiments of the present application can be embodied in the form of a software product, which can be stored in a non-volatile storage medium (such as CD-ROM, USB flash drive, external hard drive, etc.) or on the network, including several instructions to enable a computing device (such as a personal computer, server, or network device) to execute the above-mentioned method according to the embodiments of the present application.

The software product may adopt any combination of one or multiple readable media. The readable medium may be a readable signal medium or a readable storage medium. A readable storage medium may be, for example, but not limited to, a system, device, or component based on electricity, magnetism, light, electromagnetism, infrared, or semiconductors, or any combination of the above. More specific examples (not an exhaustive list) of readable storage medium include: electrical connections with one or more wires, portable disks, hard disks, random access memory (RAM), read-only memory (ROM), erasable programmable read-only memory (EPROM or flash memory), optical fibers, portable compact disk read-only memory (CD-ROM), optical storage devices, magnetic storage devices, or any suitable combination of the above.

The computer-readable storage medium may include data signals propagated in baseband or as part of a carrier wave, which carry readable program code. Such transmitted data signal may take various forms, including but not limited to electromagnetic signals, optical signals, or any suitable combination of the above. The readable storage medium may also be any readable medium other than a readable storage medium, which can send, propagate, or transmit a program for use by or in conjunction with an instruction execution system, device, or component. The program code contained on the readable storage medium can be transmitted through any appropriate medium, including but not limited to wireless, wired, optical cable, RF, and so on, or any suitable combination of the above.

The program code used to perform the operations of the present application can be written in any combination of one or more programming languages, including object-oriented programming languages such as Java, C++, and conventional procedural programming languages such as "C" language or similar programming languages. The program code can be executed entirely on the user's computing device, partially on the user's device, as a standalone software package, partially on the user's computing device and partially on a remote computing device, or entirely on a remote computing device or server. In scenarios involving remote computing devices, these devices can connect to user computing devices via any type of network, including local area networks (LANs) or wide area networks (WANs). Alternatively, they can connect to external computing devices, such as by utilizing an Internet service provider to connect over the Internet.

The aforementioned computer-readable medium carries one or more programs. When the one or more programs is executed by the device, it enables the computer-readable medium to achieve the aforementioned functions.

Those skilled in the art can understand that the above-mentioned modules may be distributed in the device according to the description of the embodiments, and may also be correspondingly changed to be uniquely different from one or more devices of this embodiment. The modules in the above-mentioned embodiments can be merged into one module, or further split into multiple sub-modules.

According to the embodiments of the present application, a computer program is proposed, which includes computer programs or instructions. When executed by a processor, the computer program or instructions can perform the method described above. In an alternative embodiment, the aforementioned integrated circuit is a millimeter-wave radar chip. The types of digital functional modules in the integrated circuit can be determined according to actual needs. For example, in millimeter-wave radar chips, data processing modules can be utilized for tasks such as range-Doppler transformation, velocity -Doppler transformation, CFAR detection, DoA detection, and point cloud processing, to acquire information about the target, including distance, angle, velocity, height, micro-Doppler motion characteristics, shape, size, surface roughness, and dielectric properties.

It should be noted that wireless devices can achieve functions such as target detection and/or communication by transmitting and receiving radio signals, providing the device body with detection target information and/or communication information, thereby assisting or even controlling the operation of the device body.

For instance, when the aforementioned device body is applied to advanced driver assistance systems (ADAS), the wireless electrical devices serving as onboard sensors, such as millimeter-wave radar, can assist the ADAS system in realizing various application scenarios, including adaptive cruise control, automatic emergency braking (AEB), blind spot detection (BSD), lane change assist (LCA), rear cross traffic alert (RCTA), parking assistance, rear vehicle alert, collision avoidance, pedestrian detection, and child presence detection (CPD).

The technical features of the aforementioned embodiments can be combined in any manner. For brevity, not all possible combinations of these technical features have been described. However, as long as the combinations of these technical features do not contradict each other, they should fall within the scope of this specification.

The embodiments described above merely represent preferred embodiments of the present invention and the technical principles employed, and their descriptions are relatively specific and detailed. However, they should not be construed as limiting the scope of protection of the present invention. For those skilled in the art, various obvious changes, readjustments, and substitutions can be made without deviating from the scope of protection of the present invention. Therefore, although the present invention has been described in detail through the above embodiments, the present invention is not limited to the above embodiments. Without departing from the concept of the present invention, it can also include more other equivalent embodiments. The scope of protection of the present invention is determined by the scope of the appended claims.

**Claims**

1. A method for target detection, comprising:

   performing FFT on echo signal to generate a feature vector of the echo signal; and
   processing the feature vector using a machine learning model to achieve target detection in a region of interest, ROI.

2. The method for target detection according to claim 1, wherein the feature vector comprises energy characteristics that represent the echo signal across different range bins, or the feature vector comprises energy characteristics that represent the echo signal in different Doppler dimensions of different range bins.

3. The method for target detection according to claim 2, wherein the feature vector comprises energy characteristics that represent the echo signal in different Doppler dimensions of different range bins, and performing FFT on the echo signal comprises:

   performing FFT on the echo signal to generate a Range-Doppler map, RD map; and
   performing beam-forming based on the RD map to obtain the feature vector of the echo signal.

4. The method for target detection according to claim 3, wherein performing FFT on the echo signal to generate the RD map comprises:

   performing range-dimension FFT, Range FFT, on the echo signal; and
   performing sliding windowing on results obtained from the range-dimension FFT, and performing 2D FFT, Doppler FFT, on the windowed data to obtain the RD map;
   wherein a duration of the sliding window corresponding to a same order of magnitude as a period of a periodic motion of the target.

5. The method for target detection according to claim 3, wherein performing beam-forming based on the RD map is achieved through the following formula:

$$P(r, v, b) = \sum_{c=1}^{N_c} |x(c, r, v) \cdot sv(c, b)|^2$$

wherein $P(r,v,b)$ represents the energy characteristics of the v Doppler bin of the r range bin based on beam b, $sv(c, b)$ represents a steering vector of beam b in virtual channel c, $x(c,r,v)$ represents the corresponding data of the v Doppler bin of the r range bin in virtual channel c in the RD map, and $N_c$ represents the total number of beams.

6. The method for target detection according to claim 2, wherein the feature vector comprises energy characteristics that represent the echo signal in different Doppler dimensions of different range bins, and performing FFT and beam-forming on the echo signal comprises:

   performing Range FFT on the echo signal;
   performing beam-forming on the results from Range FFT; and
   performing sliding windowing on the results of beam-forming, and performing the 2D FFT, Doppler FFT, on the windowed data.

7. The method for target detection according to claim 2, wherein the feature vector comprises energy characteristics that represent the echo signal across different range bins, and performing FFT and beam-forming on the echo signal comprises:

   performing Range FFT on the echo signal; and
   performing beam-forming on the results from Range FFT.

8. The method for target detection according to any one of claims 3 to 7, wherein performing beam-forming comprises:

determining a target direction pointing to the ROI and generating a steering vector based on the target direction; and

performing beam-forming based on the steering vector.

9. The method for target detection according to claim 8, wherein determining the target direction pointing to the ROI comprises:
determining the target direction based on an azimuth and an elevation of the ROI relative to the radar.

10. The method for target detection according to claim 8, wherein determining the target direction pointing to the ROI comprises:

obtaining actual measurement data of the target within the ROI; and

clustering the actual measurement data of the target, and taking the azimuth and the elevation of a cluster center within the regions of interest, ROI, as the target direction.

11. The method for target detection according to claim 8, wherein generating the steering vector based on the target direction is achieved through the following formular:

$$sv(c,b) = \exp\big(1j \cdot 2\pi/\lambda \cdot (x_c \cos \phi_b \sin \theta_b + z_c \sin \phi_b)\big),$$

wherein $sv(c,b)$ represents the steering vector of beam b in virtual channel c, $\lambda$ represents the central wavelength of the radar detection signal, $x_c$ and $z_c$ respectively represent the horizontal and vertical positions of the antenna corresponding to the virtual channel $c$, $\theta_b$ represents the azimuth corresponding to the target direction, and $\phi_b$ represents the elevation corresponding to the target direction.

12. The method for target detection according to any one of claims 2 to 7, wherein generating the feature vector of the echo signal comprises:
rearranging, according to preset rules, the energy characteristics obtained from FFT and beam-forming performed on the echo signal to obtain the feature vector.

13. The method for target detection according to claim 12, wherein the preset rules comprise:

data with a same first dimension is continuously arranged according to a progression direction of a second dimension, and an overall arrangement of the data follows a progression direction of the first dimension, or,

data with a same third dimension and a same fourth dimension is continuously arranged according to a progression direction of a fifth dimension, data with the same third dimension is continuously arranged according to a progression direction of the fourth dimension, and an overall arrangement of the data follows the progression direction of the third dimension,

wherein the first and second dimensions refer to different dimensions in the beam and range dimensions, respectively, and the third, fourth, and fifth dimensions refer to different dimensions in the beam, range, and Doppler dimensions, respectively.

14. The method for target detection according to any one of claims 2 to 7, wherein generating the feature vector of the echo signal comprises:
performing logarithmic normalization on the energy characteristics obtained from FFT and beam-forming performed on the echo signal.

15. The method for target detection according to claim 14, wherein performing logarithmic normalization on the energy characteristics obtained from FFT and beam-forming performed on the echo signal comprises:
logarithmically transforming the energy characteristics obtained from FFT and beam-forming performed on the echo signal, and linearly normalizing the logarithmically transformed results by using preset upper and lower bound constraints.

16. The method for target detection according to claim 15, wherein logarithmically transforming the energy characteristics obtained from FFT and beam-forming performed on the echo signal and linearly normalizing the logarithmically transformed results by using preset upper and lower bound constraints is achieved through the following formula:

$$P_{\mathrm{norm}}(r,v,b) = \begin{cases} P_{max}, & \frac{\log_2(\mathrm{P}(r,v,b))-b_0}{a_0} \leq P_{max} \\ \frac{\log_2(\mathrm{P}(r,v,b))-b_0}{a_0}, P_{min} \leq & \frac{\log_2(\mathrm{P}(r,v,b))-b_0}{a_0} \leq P_{max} \\ P_{min}, & \frac{\log_2(\mathrm{P}(r,v,b))-b_0}{a_0} < P_{min} \end{cases}$$

wherein $P_{\mathrm{norm}}$ *(r, v, b)* represents the logarithmic normalization result, P(*r, v, b*) represents the energy characteristic of beam *b* at the range bin *r* and the Doppler bin *v,* and $a_0$, $b_0$, $P_{max}$, and $P_{min}$ are all preset parameters.

17. The method for target detection according to any one of claims 2 to 7, wherein the machine learning model is a deep learning model, and before processing the feature vector using the machine model, the method further comprises:

   obtaining a training feature vector, wherein the training feature vector carries one-hot encoded labels and is used to represent the energy characteristics of the signal across different range bins;
   processing the training feature vector by using a preset data augmentation method to obtain a training set, wherein the preset data augmentation method comprises at least one of the following: randomly adding white noise, flipping the data along Doppler dimension, and shifting the data along range dimension, and
   training the deep learning model based on the training set.

18. The method for target detection according to any one of claims 2 to 7, wherein the target detection result is a confidence matrix wherein the elements correspondingly indicate at least one of the following items of information: confidence level of detecting the presence of target, confidence level of the presence of target within the corresponding ROI, confidence level of the presence of an adult target within the corresponding ROI, and confidence level of the presence of a child target within the corresponding ROI.

19. The method for target detection according to any one of claims 2 to 7, wherein the feature vector comprises energy characteristics that represent the echo signal at different range bins within a preset Range bin index range and/or a preset Doppler bin index range.

20. The method for target detection according to claim 1, wherein the machine learning model comprises a neural network model, and processing the feature vector using the machine model comprises:

   normalizing a preset number of frame data, and inputting the normalized data into a pre-trained neural network model; or,
   normalizing a preset number of frame data, converting the normalized data into a complex number, and inputting either the complex number, or real part of the complex number, or imaginary part of the complex number, into the neural network model.

21. The method for target detection according to claim 20, wherein normalizing the preset number of frame data comprises: the normalization is performed according to the following formula:

$$P_{\mathrm{norm}}(r,v,b) = \begin{cases} P_{max}, & P(r,v,b) \leq a_0 P_{max} + b_0 \\ \frac{P(r,v,b)-b_0}{a_0}, & a_0 P_{min} + b_0 \leq P(r,v,b) \leq a_0 P_{max} + b_0 \\ P_{min}, & P(r,v,b) \leq a_0 P_{min} + b_0 \end{cases}$$

wherein $P_{\mathrm{norm}}$ (r, v, b) is the normalized result obtained from beam b at range bin r and chirp v, P(r,v,b) is power of DBF data for the beam b at range bin r and chirp v, $b_0$ and $a_0$ are preset normalization parameters, and $P_{max}$ and $P_{min}$ are preset upper and lower limits of P(r,v,b), respectively.

22. The method for target detection according to claim 21, wherein
   $b_0$ is a mean or median of all possible values of $\log_2$ (P(r, v, b)), and $a_0$ is a difference between 95% quantile and 5% quantile of all possible values of $\log_2$(P(r,v,b)), divided by 256.

23. The method for target detection according to claim 20, wherein converting the normalized data into the complex number comprises: the conversion is performed according to the following formula:

$$z_{real}(r, v, b) = Re[P_{norm}(r, v, b) \cdot exp(1j \cdot \phi(r, v, b))]$$

$$z_{img}(r, v, b) = Im[P_{norm}(r, v, b) \cdot exp(1j \cdot \phi(r, v, b))]$$

wherein $z_{real}$ and $z_{img}$ represent the real and imaginary parts after conversion, respectively, $P_{norm}(r, v, b)$ represents the normalized result, and $\phi(r,v,b)$ represents a phase of beam b at range bin r and chirp v.

24. The method for target detection according to claim 23, wherein the neural network model is a complex-valued neural network model, and/or
comprises a complex convolutional layer, a complex nonlinear activation layer, a pooling layer, a complex fully connected layer, and an absolute value layer.

25. The method for target detection according to claim 1, wherein performing FFT on the echo signal to generate the feature vector of the echo signal comprises:
after performing Range FFT on the echo signal, obtaining 1D-FFT, Range FFT, data, performing multi-frame joint processing on the 1D-FFT data to obtain the RD map as the feature vector.

26. The method for target detection according to claim 25, wherein processing the feature vector based on the model to achieve target detection in the ROI comprises:

inputting target point cloud data into a pre-trained first machine learning classifier to obtain a first detection result indicating whether a candidate target detection point is a valid candidate target detection point, wherein the target point cloud data comprises coordinate data,
wherein the first machine learning classifier is any one or more of the following classifiers: support vector machine, random forest, decision tree, Gaussian Mixture Model, KNN, hidden Markov, and multilayer perceptron.

27. The method for target detection according to claim 26, wherein the data input to the first machine learning classifier further comprises one or more of the following: range data, constant false alarm rate signal-to-noise ratio, amplitude, Doppler frequency, azimuth mid-angle, and elevation.

28. The method for target detection according to claim 25, wherein processing the feature vector based on the model to achieve target detection in the ROI comprises:

processing target point cloud data, extracting regional information of candidate target detection points, and inputting the regional information into a pre-trained second machine learning classifier to obtain a second detection result indicating whether there is a target in a preset region;
wherein the second machine learning classifier is any one or more of the following classifiers: support vector machine, random forest, decision tree, Gaussian Mixture Model, KNN, hidden Markov, and multilayer perceptron.

29. An integrated circuit, comprises a radio frequency module, an analog signal processing module, and a digital signal processing module connected in sequence;

wherein the radio frequency module is configured to generate a radio frequency transmitting signal and receive a radio frequency receiving signal;
the analog signal processing module is configured to perform frequency reduction processing on the radio frequency receiving signal to obtain an intermediate frequency signal;
the digital signal processing module is configured to perform analog-to-digital conversion on the intermediate frequency signal to obtain a digital signal and to process the digital signal in the method for target detection according to any one of claims 1 to 28 to achieve target detection.

30. A electromagnetic wave sensor, comprising:

a carrier,
the integrated circuit according to claim 29, arranged on the carrier; and
an antenna arranged on the carrier, or the antenna and the integrated circuit integrated into a single piece and arranged on the carrier;

wherein the integrated circuit is connected with the antenna to transmit the radio frequency transmitting signal and/or receive the radio frequency receiving signal.

31. A terminal device, comprising:

a device body; and
the electromagnetic wave sensor according to claim 30, arranged on the device body;
wherein the electromagnetic wave sensor is configured for target detection and/or communication, to provide reference information for operation of the device body.

Perform FFT and beam-forming on echo signal to generate a feature vector of the echo signal, where the feature vector includes energy characteristics representing the echo signal across different range bins ⌇ 101

Process the feature vector using a deep learning model to achieve target detection for a region of interest ⌇ 102

FIG. 1

Main control module

frame data
integration

Target classification
（HIST、
Classification） → Result

Baseband module

Frame
data → Range DC
removal → Range
FFT → Doppler
DC
removal → Frame
FFT → Non-
coherent
integration → NVE

CFAR → Azimuth
dimension
DBF and
DoA → Elevation
dimension
DBF and
DoA

FIG. 2

Perform FFT on the echo signal to generate a Range-Doppler map  1011

101

Perform beam-forming based on the Range-Doppler map  1012

Process the feature vector using a deep learning model to achieve target detection for a region of interest  102

FIG. 3

Perform 1D FFT (Range FFT) on the echo signal  1013

101

Perform beam-forming on the results from Range FFT  1014

Perform sliding windowing on the results of beam-forming, and perform 2D FFT (Doppler FFT) on the windowed data  1015

Process the feature vector using a deep learning model to achieve target detection for a region of interest  102

FIG. 4

Perform Range FFT on the echo signal   1016

101

Perform Beam-forming on the results from Range FFT   1017

Process the feature vector using a deep learning model to achieve target detection for a region of interest   102

FIG. 5

Seat A   Seat B   Seat C

Aisle A   Aisle B   Aisle C

Cabin

FIG. 6

FIG. 7

EP 4 530 668 A1

| input-tensor depth:0 | (1, 6, 24, 64) |
|---|---|

| Conv2d depth:1 | input: | (1, 6, 24, 64) |
|---|---|---|
| | output: | (1, 16, 12, 32) |

| BatchNorm2d depth:1 | input: | (1, 16, 12, 32) |
|---|---|---|
| | output: | (1, 16, 12, 32) |

| relu depth:1 | input: | (1, 16, 12, 32) |
|---|---|---|
| | output: | (1, 16, 12, 32) |

| max_pool2d depth:1 | input: | (1, 16, 12, 32) |
|---|---|---|
| | output: | (1, 16, 6, 8) |

| Conv2d depth:1 | input: | (1, 16, 6, 8) |
|---|---|---|
| | output: | (1, 48, 6, 8) |

| BatchNorm2d depth:1 | input: | (1, 48, 6, 8) |
|---|---|---|
| | output: | (1, 48, 6, 8) |

| relu depth:1 | input: | (1, 48, 6, 8) |
|---|---|---|
| | output: | (1, 48, 6, 8) |

| max_pool2d depth:1 | input: | (1, 48, 6, 8) |
|---|---|---|
| | output: | (1, 48, 3, 2) |

| Conv2d depth:1 | input: | (1, 48, 3, 2) |
|---|---|---|
| | output: | (1, 128, 3, 2) |

| BatchNorm2d depth:1 | input: | (1, 128, 3, 2) |
|---|---|---|
| | output: | (1, 128, 3, 2) |

| relu depth:1 | input: | (1, 128, 3, 2) |
|---|---|---|
| | output: | (1, 128, 3, 2) |

| max_pool2d depth:1 | input: | (1, 128, 3, 2) |
|---|---|---|
| | output: | (1, 128, 1, 1) |

| view depth:1 | input: | (1, 128, 1, 1) |
|---|---|---|
| | output: | (1, 128) |

| Dropout depth:1 | input: | (1, 128) |
|---|---|---|
| | output: | (1, 128) |

| Linear depth:1 | input: | (1, 128) |
|---|---|---|
| | output: | (1, 10) |

| output-tensor depth:0 | (1, 10) |
|---|---|

FIG. 8

Obtain the training feature vector, where the training feature vector carries one-hot encoded labels and is used to represent the energy characteristics of the signal across different range bins ⟩ 103

Process the training feature vector by using a preset data augmentation method to obtain a training set, where the preset data augmentation method includes at least one of the following: randomly adding white noise, flipping the data along Doppler dimension, and shifting the data along range dimension. ⟩ 104

Train the deep learning model based on the training set ⟩ 105

Perform FFT and beam-forming on the echo signal to generate a feature vector of the echo signal, where the feature vector includes energy characteristics representing the echo signal across different range bins ⟩ 101

Process the feature vector using a deep learning model to achieve target detection for a region of interest ⟩ 102

FIG. 9

EP 4 530 668 A1

**Main control module**

frame data integration

DL-based Classification → Result

**Baseband module**

Frame data → Range DC removal → Range FFT → Doppler DC removal → Frame FFT → 6-point 2D-FFT

FIG. 10

Main control module

DL-based Classification

Result

frame data integration

Baseband module

Range DC removal

Range FFT

Six-point 2D-FFT

Doppler DC removal

Frame FFT

Frame data

FIG. 11

Main control module

| frame data integration | → | （Complex）DL-based Classification | → Result |

Baseband module

Frame data → | Range DC removal | → | Range FFT | → | Six-point 2D-FFT |

FIG. 12

FIG. 13

FIG. 14

FIG. 15

**MCU**

store 128(+ 1) frames

DL-based
Classification

Classification
result

**BB**

Range DC
removal

Range FFT

Doppler DC
removal

Frame FFT

Non-coherent
integration

FIG. 16

**MCU**

store 128(+1) frames

**BB**

Range DC removal → Range FFT → ... → Doppler DC removal → Frame FFT → Non-coherent integration → CFAR detection with peak selection

DL-based Classification → Classification result

FIG. 17

FIG. 18

FIG. 19

FIG. 20

FIG. 21

FIG. 22

| $r_0$ | $\bullet\bullet\bullet$ | $r_{Nv}$ | $r_0$ | $\bullet\bullet\bullet$ | $r_{Nv}$ | $\bullet\bullet\bullet$ | $r_0$ | $\bullet\bullet\bullet$ | $r_{Nv}$ | $\bullet\bullet\bullet\bullet\bullet\bullet\bullet$ |

$\longleftarrow\quad v_0 \quad\longrightarrow\quad\longleftarrow\quad v_1 \quad\longrightarrow\qquad\longleftarrow\quad v_{Nr} \quad\longrightarrow$

$\longleftarrow\qquad\qquad\qquad\qquad c_0 \qquad\qquad\qquad\qquad\longrightarrow$

FIG. 23

Obtain 1D-FFT data after perform Range FFT on the echo signal   $\sim$ 10

Perform digital beam-forming on the 1D-FFT data to obtain a preset number of frame data   $\sim$ 20

Perform target classification on the preset number of frame data using a machine learning model to achieve target detection   $\sim$ 30

FIG. 24

Obtain 1D-FFT data after perform Range FFT on the echo signal, and then perform multi-frame joint processing on the 1D-FFT data to obtain the RD map   $\sim$ 30

Obtain target point cloud data based on the RD map, and perform target classification based on machine learning on the target point cloud data to achieve the detection of targets in the regions of interest   $\sim$ 40

FIG. 25

FIG. 26A

FIG. 26B

FIG. 26C

FIG. 26D

<div align="center">

**INTERNATIONAL SEARCH REPORT**

</div>

| International application No. |
| --- |
| **PCT/CN2024/107407** |

| A. | CLASSIFICATION OF SUBJECT MATTER |
| --- | --- |

G01S13/06(2006.01)i

According to International Patent Classification (IPC) or to both national classification and IPC

| B. | FIELDS SEARCHED |
| --- | --- |

Minimum documentation searched (classification system followed by classification symbols)

IPC: G01S

Documentation searched other than minimum documentation to the extent that such documents are included in the fields searched

Electronic data base consulted during the international search (name of data base and, where practicable, search terms used)

CNABS, CNTXT, VEN, CNKI: 目标检测, 目标识别, 特征向量, 机器学习, 深度学习, 神经网络, target detect+, eigenvector, machine learning, deep learning, neural network

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 113093170 A (CHANGSHA MICROBRAIN INTELLIGENT TECHNOLOGY CO., LTD.) 09 July 2021 (2021-07-09) <br> description, paragraphs 3-11 and 15-22 | 1-12, 14-24, 29-31 |
| X | CN 113887583 A (NANJING UNIVERSITY OF SCIENCE AND TECHNOLOGY) 04 January 2022 (2022-01-04) <br> description, paragraphs 4-35 and 43-78 | 1-12, 14-24, 29-31 |
| A | US 2019204416 A1 (FURUNO ELECTRIC CO., LTD.) 04 July 2019 (2019-07-04) <br> entire document | 1-31 |
| A | CN 113050797 A (SHENZHEN JELICOMM TECHNOLOGY CO., LTD.) 29 June 2021 (2021-06-29) <br> entire document | 1-31 |
| A | CN 116338613 A (XIDIAN UNIVERSITY) 27 June 2023 (2023-06-27) <br> entire document | 1-31 |
| A | CN 113486961 A (ANHUI YAOFENG RADAR TECHNOLOGY CO., LTD.) 08 October 2021 (2021-10-08) <br> entire document | 1-31 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **08 November 2024** | **09 November 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/107407**

| Patent document cited in search report | | | Publication date (day/month/year) | Patent family member(s) | | | Publication date (day/month/year) |
|---|---|---|---|---|---|---|---|
| CN | 113093170 | A | 09 July 2021 | None | | | |
| CN | 113887583 | A | 04 January 2022 | None | | | |
| US | 2019204416 | A1 | 04 July 2019 | EP | 3505951 | A1 | 03 July 2019 |
| | | | | JP | 2019120543 | A | 22 July 2019 |
| | | | | JP | 7182869 | B2 | 05 December 2022 |
| CN | 113050797 | A | 29 June 2021 | None | | | |
| CN | 116338613 | A | 27 June 2023 | None | | | |
| CN | 113486961 | A | 08 October 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310913653